# EUROPEAN PATENT SPECIFICATION

(11) **EP 3 166 910 B1**
(45) Date of publication and mention of the grant of the patent: **03.10.2018**
(21) Application number: 15734652.9
(22) Date of filing: 03.07.2015
(51) Int. Cl.: C04B 38/00, C04B 35/18, C04B 35/638, B01J 29/06, C01B 39/00

(54) **A METHOD FOR PREPARING MESOPOROUS MICROPOROUS CRYSTALLINE MATERIALS INVOLVING A RECOVERABLE AND RECYCLABLE MESOPORE-TEMPLATING AGENT**
VERFAHREN ZUR HERSTELLUNG MESOPORÖSER MIKROPORÖSER KRISTALLINER MATERIALIEN UNTER VERWENDUNG EINES WIEDERHERSTELLBAREN UND WIEDERVERWENDBAREN MESOPORENFORMUNGSMITTELS
PROCÉDÉ DE PRÉPARATION DE MATÉRIAUX CRISTALLINS MICROPOREUX MÉSOPOREUX IMPLIQUANT UN AGENT DE MODÈLE MÉSOPOREUX POUVANT ÊTRE RÉCUPÉRÉ ET RECYCLÉ

(30) Priority: 11.07.2014 EP 14290200; 26.03.2015 EP 15161176
(43) Date of publication of application: 17.05.2017
(73) Proprietor: Total Research & Technology Feluy, 7181 Seneffe (BE); Centre National de la Recherche Scientifique (CNRS), 75016 Paris (FR)
(72) Inventor: CHAL, Robin, 67100 Strasbourg (FR); GERARDIN, Corine, 34790 Grabels (FR); FAJULA, François, 34820 Teyran (FR); IN, Martin, 34790 Grabels (FR); MINOUX, Delphine, 1400 Nivelles (BE); VAN DONK, Sander, 74000 Annecy (FR)
(74) Representative: Mazurelle, Jean
(86) International application number: PCT/EP2015/065174
(87) International publication number: WO 2016/005277

(56) References cited:
- WO-A1-2009/081000
- WO-A2-2007/130395
- WO-A2-2012/070067
- MINKEE CHOI ET AL: "Amphiphilic organosilane-directed synthesis of crystalline zeolite with tunable mesoporosity", NATURE MATERIALS, vol. 5, no. 9, 1 September 2006 (2006-09-01), pages 718-723, XP055116879, ISSN: 1476-1122, DOI: 10.1038/nmat1705

## Description

The present invention relates to a method for preparing hierarchical materials combining both micro- and mesoporosity and involving a recoverable and recyclable mesopore templating agent in mild aqueous conditions.

Zeolites are important catalytic materials in petroleum refining industry and petrochemistry, thanks to their microporous structure, strong acidity and hydrothermal stability. However, the presence of micropores (diameter < 2 nm), which allows both a high surface area and shape selectivity, may limit their unique catalytic properties to small reactant molecules, due to steric constraints. One of the major issues in the development of new zeolite catalysts is to ensure a better accessibility of the zeolite's active sites for the reactant and/or product molecules, in order to maximize the catalyst effectiveness.

The industrially developed method consists in creating mesoporosity in zeolites via a 'destructive' (structure breaking) approach such as dealumination using steaming or leaching techniques. From a cost perspective, these techniques are attractive, which explains why they are largely used today in industry. However, the introduction of mesopores by these ways presents two major drawbacks:
- it is not easily controlled and, often, materials are obtained with a random and non-optimized mesoporosity;
- furthermore, by using such mesoporisation routes, the synthesis yields are also not optimal: for example, in case of desilication, the material yield can vary from 40 to 90% depending on the amount of extracted silicium, which impacts the cost of the process, as significant loss of zeolite material is unavoidable.

To alleviate the above mentioned issues, several routes have been developed:
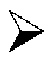 The direct assembly of nanosized zeolite precursors with a surfactant [Tosheva, Chem. Mater., 2005, 17, 2494-2513]: by condensing zeolite seeds around a SDA (Structure Directing Agent), the method has led successfully to the preparation of mesoporous silicates starting from seeds of zeolite FAU [Liu Y., JACS, 2000, 122, 8791-8792] ;
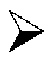 The dual templating approach : in this approach, the strategies starting from mixtures of micro- and mesopore directing templates with aluminosilicate precursors are considered [Kloetstra K.R., Microporous Mater. 1996, 6, 287-293 ; Karlsson A., Microporous Mesoporous Mater. 1999, 27, 181-192 ; Ryoo R., WO200704373 ; M.Choi, Nat.Mater. 2006, 5, 718-723].
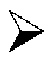 The zeolite recrystallization route, combining the 'destructive' and 'constructive' approaches : zeolites are subjected to a preliminary partial dissolution before they recrystallize around the mesopore templating agent, which is typically a cationic surfactant (such as hexadecyltrimethylammonium bromide) interacting with silica by electrostatic interactions. This approach allows obtaining a hierarchical structure with long range crystallinity and a high mesoscopic order located in the same crystals, revealing the presence of both zeolite micropores as well as structured mesopores [Wang S., Catal. Comm. 2005, 6, 87-91 ; Garcia Martinez J., US20050239634 - Ivanova I.I., Microporous Mesoporous Mater. 2007, 105, 101-110; Chal R., Cacciaguerra T., van Donk S., Gerardin C., Chem. Commun., 2010, 46, 7840-7842].

However, the effective application in industry of hierarchically porous materials obtained following the above mentionned routes is still highly limited because of their high cost, which is partially related to the high cost of the organic template also called Structure Directing Agent (SDA). In order to remove this SDA, the material generally needs to be calcined at a high temperature, which decomposes the structuring agent into small components that may be extracted from the pores. Calcination may produce negative effects such as deterioration of the structure of the material and salting-out of effluents that may cause environmental problems and/or high energy consumption.

The present invention relates to a process for manufacturing hierarchically porous materials combining both micro- and mesoporosity, the controlled mesoporosity being obtained by using an organic structuring agent recoverable and recyclable under mild aqueous conditions, thus alleviating:
- the cost inherent in the use of an expensive organic structuring agent : by using mild recovery conditions, at least part of the organic structuring agent may be reused during other syntheses ;
- the risks of deterioration of the structure by avoiding a step of heating at high temperature ;
- as well as HSE risks such as runaway during removal of the organic structuring agent if calcination is used and CO₂ emission, and high energy consumption.

The use of organic SDA that can be disassembled within the zeolite pore space to allow removal of their fragments for possible use again by reassembly and thus avoid high temperature combustion was first reported by the group of M.E. Davis in 2003 [Nature 425, 385-388*]* in the field of microporous zeolite materials.

WO 2012/070067 A2 discloses the use of a templating agent for preparing a MWW type zeolite by mixing together, in the absence of any organic structure directing agent or crystalline MWW type zeolie seeds, a predetermined quantity of a compound containing silicon dioxide, a compound containing metal oxide, water and a pH modifier to obtain an aqueous amorphous metallosilicate gel followed by a step of hydrothermally treating said gel in the presence of an organic templating agent to provide a crystalline MWW zeolite. This document discloses the templating agent like N,N,N-trimethyl-1-adamantammonium hydroxide or trimethyl ammonium bromide. Such templating agent presents the ability to form micelles, they however do not present the ability to disable by changing one parameter like the temperature or the pH. The templating agent is then necessarily removed by calcination. All the examples presented in this document clearly indicate that the solid prepared has to be calcined.

WO 2007/130395 A2 discloses the preparation of zeolites with uniform intracrystal textural pores between 1 and 10 nm. An alumina source and a silica source are reacted in the presence of a silane modified polymer as a porogen and the reaction product is calcined to form the zeolite. In particular this document discloses the use of polymer modified silane. In such polymer modified silane, the polymer is covalently linked to the silicon. This polymer modified silane is then used as structure directing agent. The silicon of the polymer modified silane is incorporated in the zeolite formed and can only be removed via calcination.

Minkee Choi et al. in Nature Materials, vol. 5 no 9, pages 718-723 discloses the use amphiphilic organosilane surfactant in the preparation of zeolites. The amphiphilic organosilane surfactants present functional groups to enhance the interaction with growing crystals more precisely the amphiphilic organosilane surfactants present a hydrolysable methoxysilyl moiety, a zeolite structure-directing group such as a quaternary ammonium and a hydrophobic alkyl chain moiety. The organosilane strongly interact with the growing crystal domains through the formation of covalent bonds with other SiO2 and Al2O3 sources using the methoxysilyl moiety.

In 2008, the group of C. Gérardin was the first one to propose an ecologically minded design for preparing ordered mesoporous materials : the method is based on the use of new colloidal structuring agents obtained by the nonconvalent reversible assembly of hydrophilic polymers in water during the synthesis of silica ; an important property of these polymers is their capacity to form induced micellar aggregates either by addition of another component, or by a physico-chemical stimulus such as a variation of pH, ionic strength, or temperature ; the use of an opposite stimulus to recover the structuring agents circumvents the classical calcination treatment at high temperature. The concept was demonstrated by mesostructured silica preparation at room temperature using reversible pH-responsive micellar assemblies of watersoluble double hydrophilic block copolymers (DHBCs) [N.Baccile et al., Angew. Chem. Int. Ed., 2008, 47, 8433-8437; WO2009/081000].

The extension of this concept to the use of thermosensitive DHBC as SDA for the formation of mesoporous silica can be found in [J. Reboul et al., Polymer Preprints, 2011, 52(2), 717].

However, the work achieved by Gérardin et al. on thermosensitive DHBC as structuring agents is limited to the preparation of amorphous mesoporous materials under acidic conditions due to the nature of the (PEO) micelles corona. Such synthesis conditions are far from those required for the synthesis of crystallized zeolitic structures, as a strong basic solution (pH above 10, more preferably above 12) is used to favor the reorganization of the aluminosilicate species around the structuring agent. The interactions between the thermosensitive DHBC and the silice are of the nature of hydrogen bond under acidic condition and they cannot be transposed under basic conditions. However for the preparation of crystalline materials can only be performed under basic solution.

The present invention discloses the synthesis of mesoporized micropore-containing crystalline material including silicates and aluminosilicates by involving a mesopore templating agent, which is recoverable and recyclable under mild conditions in water.

For the first time, it has been demonstrated among others that:
- a structuring agent, having a surfactant type behavior, has been successfully designed for its use in the mesoporization of micropores-containing crystalline materials;
- by using such structuring agent, a controlled mesostructure with narrow, controlled and tailorable pore size distribution could be formed within the micropore-containing crystalline materials;
- the extraction of the surfactant in aqueous solution has been successfully achieved, a recovery of more than 60% of the structuring agent being obtained ;
- the recycling of the aqueous structuring agent solution has been successfully conducted at least four times.

Given the wide field of applications concerned by the use of hierarchically porous zeolites overcoming diffusional limitations, such as hydrocracking, oligomerization, FCC, and others, the present invention might play a crucial role for industrial implementation of hierarchically porous zeolites by alleviating:
- the inherent cost to the use of an expensive organic structuring agent : by using mild recovery conditions, at least part of the organic structuring agent may be reused during other syntheses ;
- the risks of deterioration of the structure by limiting the exothermicity generated during calcination step;
- as well as HSE risks and high energy consumption.
For that aim, the instant invention discloses a method for preparing mesoporous microporous crystalline material involving at least one mesopore-templating agent, said method comprising the following steps:
(a) preparing a basic aqueous solution containing a parent material chosen among (i) a microporous crystalline material and/or seeds thereof, (ii) precursors of materials of (i) optionally in the presence of a micropore-templating agent, or (iii) a combination of materials from (i) and (ii); and said at least one mesopore-templating agent, said mesopore-templating agent being soluble under the form of unimers in said solution, able to generate a micellization with temperature increase so that unimers assemble to form micellar aggregates, the micellization being reversible when decreasing temperature;
(b) subjecting the synthesis medium of step (a) to mild hydrothermal conditions, the micellization of said templating agent(s) in solution occurring at a temperature lower than the temperature of the hydrothermal treatment;
(c) stopping the treatment of step (b) by cooling down the system as obtained in (b) so as to dissociate the micellar aggregates of said mesopore-templating agent(s) and optionally neutralizing the system with an acid-containing solution;
(d) recovering the mesoporous microporous crystalline material of step (c) and recovering said mesopore-templating agent(s) at least in part;
(e) optionnally, placing the mesoporous microporous crystalline material of step (d) in contact, with an ion exchange solution, preferably under stirring.
For the preparation of a crystalline material such as for instance a molecular sieve or preferably an aluminosilicate or even more preferably a zeolite, a basic aqueous solution is required. Such preparation requires the dissolution an recrystallization of at least a part of the molecular sieve. This dissolution and/or recrystallization is only possible under basic solution. Indeed only under basic solution the aluminosilicates species are movable and able to reorganize around the templating agent. In a preferred embodiement, the pH of said basic aqueous solution is of at least 10, preferably of at least 12.

The parent material of step (a) is preferably a microporous crystalline aluminosilicate.

Alternatively, the parent material of step (a) is chosen among
(i) an aluminosilicate preferably selected among Y zeolite, ZSM-5, mordenite, ferrierite and zeolite Beta, or
(ii) the precursors of materials of (i) comprising an inorganic source of silicon selected among precipitated silica, pyrogenic silica (fumed silica), and an aqueous colloidal suspension of silica; or an organic source of silicon, preferably a tetra alkyl orthosilicate; and comprising a metal source selected from metal oxide, metal salt and metal alkoxide, wherein the metal is selected among aluminium, boron, iron, gallium and titanium.

Crystalline silicates (also called zeolites) are microporous crystalline inorganic polymers based on a framework of XO₄ tetrahedra linked to each other by sharing of oxygen ions, where X may be trivalent (e.g. Al,B,...) or tetravalent (e.g. Ge, Si,...). The crystal structure of a crystalline silicate as determined by X-Ray diffraction is defined by the specific order in which a network of tetrahedral units are linked together. The size of the crystalline silicate pore openings is determined by the number of tetrahedral units, or, alternatively, oxygen atoms, required for forming the pores and the nature of the cations that are present in the pores. They possess a unique combination of the following properties: high internal surface area; uniform pores with one or more discrete sizes; ion exchangeability; good thermal stability; and ability to adsorb organic compounds. The Atlas of Zeolite Framework Types (C Baerlocher, LB McCusker, DH Olson, 6th ed. Elsevier, Amsterdam, 2007) in conjunction with the web-based version (http://www.iza-structure.org/databases/") is a compendium of topological and structural details about crystalline silicate frameworks, including the types of ring structures present in the zeolite and the dimensions of the channels defined by each ring type.
Various commercial zeolite products may be used, or it is possible to use zeolites that have been synthesized by a known method disclosed in e.g. "Verified Synthesis of Zeolitic Materials" (2nd Revised Edition 2001 Elsevier) published by the above IZA.

According to an embodiment, the dealuminated crystalline silicate is advantageously such as about 10% by weight of the aluminium is removed. Such dealumination is advantageously made by a steaming optionally followed by a leaching.

In a preferred embodiment, suitable zeolites for use in the process described herein comprise a topology selected from the group comprising BEA, MFI, FAU, MEL, FER, MOR and MWW.

In a specific embodiment, the preferred parent crystalline silicate is a crystalline aluminosilicate having the FAU topology. A particularly preferred zeolite is a Y zeolite in protonated form having the FAU structure and a bulk Si/AI ratio greater than or equal to 12, preferably of 15. Such a zeolite Y may be obtained, for example, by applying to a parent Y at least one dealumination treatment, in particular, a partial dealumination treatment, for example with at least one acid and/or water vapour. Most particularly, these treatments correspond to those described in patent US5601798.
Exemplary commercially available zeolites suitable for use in the present invention described herein include, but are not limited to Y zeolite (FAU topology).
As a micropore-templating agent, it is possible to use alkaline metal ions, quaternary ammonium salts, organic ammonium salts. Tetraalkylammonium such as tetramethylammonium, tetraethylammonium, tetrapropylammonium, etc.., may be preferably employed.
Said mesopore-templating agent can be either an ionic molecule or a polymer bearing at least one ionic function, rendered amphiphilic upon the effect of the variation of a physico-chemical parameter (pH, temperature, ionic strength).

The mesopore-templating agent according to the invention contains a thermosensitive oligomeric or polymeric chain, which is preferably made of the following constituting parts:
- at least a mono- or poly-ionic block or a hydrophilic polar charged head
- and at least an organic oligomeric or polymeric chain, which may become insoluble under the effect of a variation in a physicochemical parameter (pH, temperature, ionic strength),
the combination of the two becoming amphiphilic under the effect of a variation in a physicochemical parameter.
As regards the organic oligomeric or polymeric part of the mesopore-templating agent, the use of thermosensitive polymers is preferred. By thermosensitive polymers, it is meant that above a given temperature defined as LCST (Low Critical Solubility Temperature) the polymer is no more soluble in the aqueous medium. Said LCST being preferably measured by Dynamic Light Scattering (DLS).
Most preferably, organic chains having a LCST above 15°C, preferably above 20°C, more preferably above 30°C are preferred, as well suited to the hydrothermal temperature conditions of the parent microporous crystalline materials.
Most preferably, organic chains having a LCST below 200°C, preferably below 120°C, more preferably below 100°C are preferred, as well suited to the hydrothermal temperature conditions of the parent microporous crystalline materials.
Said thermosensitive polymers possess an inversion of solubility upon heating. When the temperature is increase up to the LCST, the behaviour of the thermosensitive polymer abruptly changes: the polymer changes from hydrophilicity to hydrophobicity abruptly when the LCST is reached and the thermosensitive polymers become insoluble in water.
Thermosensitive organic chains may be selected, without being limited to, among:
- poly(N-isopropylacrylamide) having a LCST of 32°C
- poly(methylvinylether) having a LCST of 29°C
- poly(2-(N,N-dimethylamino)ethylmethacrylate having a LCST of 50°C
- poly(ethylene oxide) having a LCST comprised between 100-150°C
- poly(propylene oxide) having a LCST comprised between 15-50°C depending on the chain length
and/or combination thereof.

In a preferred embodiment, the selected organic polymer chain is a statistical copolymer of PEO (poly(ethyleneoxide)) and PPO (poly(propyleneoxide)), the relative proportion of EO (ethylene oxide) and PO (propylene oxide) units in the polymer chain being of key importance as it determines the LCST (Lower Critical Solution Temperature) of the organic polymer chain.

In a preferred embodiment, the mesopore-templating agent is selected among statistical copolymers of PEO (poly(ethylene oxide)) and PPO (poly(propylene oxide)) functionnalized by a quaternary ammonium salt, such as quaternized Jeffamines ® (obtained from Hunstman International), the molecular size of which varying from 140 to 5000 g/mol and the ethylene oxide/propylene oxide molar ratio of which varing from 0.01 to 5, more preferably from 0.1 to 1, most preferably from 0.1 to 0.5, said Jeffamines ® being quaternized on their primary amine.

The Jeffamine ® can be selected among Jeffamine ® M600 and Jeffamine ® M2005.

According to another aspect, the invention discloses a mesopore templating agent comprising an organic cationic product having (i) a molecular weight comprised between 250 and 3000 g/mol, (ii) an optionally branched hydrocarbon chain containing from 12 to 150 carbon atoms and from 5 to 45 oxygen atoms which are inserted within the hydrocarbon chain and wherein each oxygen is bound with two distinct carbon atoms to obtain ether bonds,(iii) a terminal quaternary ammonium moiety -({[N(R4)(R5)](R6)ₙ}-H)⁺, wherein R4 and R5 are each selected among C₁-C₁₀ alkyl, R6 is -(CH₂)ₘ- with ₘ=1 to 10 and ₙ is 1, 2 or 3, preferably 1.
The mesopore templating agents according to the invention have the general structure {(R1-O-(R2-O-)ₐ-(R3)_{b}-[N(R4)(R5)(R6)]ₙ-H)}⁺, X⁻; wherein (ₐ) and (_{b}) are each independently comprised between 0 and 75 and the sum of (ₐ) and (_{b}) is not above 75, and wherein R1, R2, R3, R4, R5, R6 are each independently chosen among C₁-C₆ alkyl, and X⁻ is an anion, preferably chosen among Cl, Br and OH.
More preferably, R1 is methyl, R2, R3, are each ethyl, propyl or isopropyl, R4, R5, R6 are each independently chosen among C1-C3 alkyl, preferably C1 alkyl.
X- is advantageously an anion chosen among F, Cl, Br, I, OH, PF₆, H₂PO₃, NO₃, HSO₄, BF₄, R7-COO wherein R7 is C₁-C₃ alkyl, and wherein X- is preferably Cl, Br or OH.
Examples of suitable mesopore templating agents according to the invention include quaternized commercial or non commercial Jeffamine ® such as Jeffamine ® M600 and Jeffamine ® M2005.
According to a first preferred embodiment, the mesopore templating agent according to the invention has the general structure [R1-O-(R2-O-)ₐ-(R3)_{b}-N(R4)(R5)(R6)]⁺, X⁻; wherein:
∘ (ₐ) and (_{b}) are each independently comprised between 0 and 75, and the sum of (ₐ) and (_{b}) is not above 75; and
∘ R1, R2, R3, R4, R5, R6 are each independently chosen among C₁-C₆ alkyl, and
∘ X⁻ is an anion, preferably chosen among Cl, Br and OH.
According to a second preferred embodiment, the mesopore templating agent according to the first preferred embodiment has a chemical structure wherein R1 is methyl, R2, R3, are each ethyl, propyl or isopropyl, R4, R5, R6 are each independently chosen among C₁-C₃ alkyl, preferably C₁ alkyl.

The quaternary ammonium group of the mesopore templating agent is quaternized, preferably with chloride, bromide or hydroxide.

The hydrodynamic diameter of the unimers can range from 0.1 to 5 nm at room temperature in the solution of step (a) and the micellar aggregates can have a hydrodynamic diameter of 10 nm to 2 µm at a temperature ranging from 40 to 90°C respectively.

As regards the obtention of a mesoporous microporous crystalline silicate or aluminosilicate, the solution of step (a) is basic. The base used in step a) is a strong base and/or a weak base. Preferably the base is an alkali hydroxide, alkaline earth hydroxide, tetraalkylammonium hydroxide, sodium carbonate, potassium carbonate, ammonium carbonate, sodium citrate, potassium citrate, ammonium citrate, NH₄OH.
According to another embodiment, the base of step (a) is NaOH, NH₄OH or preferably tetramethylammonium hydroxide.

The concentration of the base ranges from 0.001 to 2M, more preferably from 0.01M to 2M, even more preferably from 0.5 to 1M.

The mesopore-templating agent/Si molar ratio in step (a) may range from 0.01 to 0.5, preferably from 0.041 to 0.3, more preferably from 0.08 to 0.18, in particular from 0.08 to 0.165.

In step (b), the mixture as prepared in step (a) can be submitted to mild hydrothermal conditions i.e.:
- at a temperature of 90 to 200°C, preferably 100 to 180°C, more preferably 100 to 160°C, and most preferably from 140 to 160° for about 5 to 30 hours, preferably from 10 to 25 hours, more preferably from 18 to 22 hours
- under autogeneous pressure from 1 to 20 bars, preferably between 1 and 15bara.

As regards the step (c), the treatment of step (b) is stopped by cooling down or quenching the system. Optionally, a neutralization may also be performed by contacting the system as obtained in step (b) with any type of acid-containing solution. The acid may be an inorganic or an organic acid, for example, sulfuric, phosphoric, citric, acetic, maleic, pyruvic, levulinic, 2-ketogulonic, keto-gluconic, thioglycolic, 4-acetylbutyric, 1,3-acetonedicarboxylic, 3-oxo propanoic, 4-oxo butanoic, 2,3-diformyl succinic, 5-oxo pentanoic, 4-oxo pentanoic, glycolic, oxamic, glyoxylic acid, EDTA (ethylenediaminetetraacetic acid), nitrilotriacetic acid, N-methylaminodiacetic acid, iminodiacetic acid, diglycolic acid, malic acid, gluconic acid, acetylacetone, tartaric acid, aconitic acid, suberic acid, tricarballylic acid, malonic acid, succinic acid and glycolic acid, , formic acid, propionic acid, butyric acid, valeric acid, caproic acid, enantic acid, caprylic acid, pelargonic acid, capric acid, undecylic acid, lauric acid, tridecylic acid, benzoic acid, salicylic acid, glutaric acid, adipic acid, pimelic acid, azelaic acid, phtalic acid, isophtalic acid, lactic acid or a mixture of those, in particular, under industrial conditions, on a large amount of material. The neutralization step may likewise be performed in presence of water. This neutralization is advantageously carried out at room temperature under magnetic or mechanical stirring.
The acid-containing solution comprises at least one acid, for example, at a concentration ranging from 0.005 to 2 M.
The purpose of the neutralization is to stop the process and to prevent the undesired destruction of the material that can result in extensive loss of crystalline structure of the zeolite, loss of microporosity and induce a decrease in the intrinsic activity of the material.

In step (d), the mesoporous microporous crystalline material can be recovered by filtration optionally followed by washing treatment.

In step (d) the mesoporous microporous crystalline material is preferably recovered according to the following procedure: (d1) filtration, (d2) optionally washing, in sequential or continuous mode, of the mesoporous microporous crystalline material so as to extract the mesopore-templating agent at least in part, with a washing solution, (d3) drying, and (d4) optionally calcination.

The washing step can be conducted using water or a solution containing nitric acid, ammoniac or ammonium nitrate, or methanol either pure or in mixture with another solvent, a filtration step allowing to extract a part of the mesopore templating agent(s) and a washing step allowing to extract another part of the mesopore-templating agent(s).

The washing solution is preferably (i) demineralized water or (ii) a water solution containing nitric acid, ammonia or ammonium nitrate, or (iii) pure methanol

The filtration step is preferably performed at a temperature below the LCST, which allows releasing at least 20% of the mesoporosity of the final material, and preferably at least 25% of the final material.

The additional washing step is preferably performed with water at a temperature below the LCST, wherein more than 70% of the mesoporosity of the material is released, preferably at least 75%.

More preferably, the washing step is performed using an aqueous solution containing an acid, preferably nitric acid, allowing to release up to 90% of the mesoporosity of the material. The concentration of the acid ranges from 0.001 to 0.2M, preferably from 0.01 to 0.15M, more preferably from 0.05 to 0.012M.

In step (d) the mesoporous microporous crystalline material can be recovered by filtration and the filtrate can be recovered and recycled as a basic aqueous solution at step (a) in a further mesoporization processing after being adjusted to a basic pH required for synthesis, and optionally after the mesopore templating agent concentration is adjusted to the required level, said mesoporization processing being repeated at least one more time.

The method according to the present invention, when applied to microporous crystalline silicates or aluminosilicates, can lead to the synthesis of mesoporous microporous crystalline material having the following characteristics:
- presence of a homogenous vermicular mesoporous phase in the solid material;
- mesopores having a narrow size distribution centred preferably between 3 and 50 nm, most preferably between 20 and 50 nm, microporosity and mesoporosity intimately connected.

In another specific embodiment, the hierarchical micro- and mesoporous crystalline material of the present invention can be formulated into a catalyst by combination with other materials that provide additional hardness or catalytic activity to the finished catalyst product. Materials which can be blended with the hierarchical material can be various inert or catalytically active materials or various binder materials. These materials include compositions such as kaolin and/or other clays, various forms of rare earth metals, phosphates, alumina or alumina sol, titania, zorconia, quartz, silica or silica sol and mixtures thereof. The catalyst may be formulated into pellets, spheres, extruded into other shapes pr formed into spray-dried particles. The amount of hierarchical material which is contained in the final catalyst product ranges from 10 to 90 weight percent of the total catalyst preferably 20 to 80 weight percent of the total catalyst.

The catalyst will contain an effective amount of an active phase comprising at least one hydrogenating/dehydrogenating component selected from the group VIB elements and the non-precious elements of group VIII of the periodic table, used alone or in a mixture, said catalyst being a sulphide phase catalyst.

Preferably, the group VIB elements of the periodic table are selected from the group formed by tungsten and molybdenum, used alone or in a mixture. According to a preferred embodiment, the hydrogenating/dehydrogenating element selected from the group formed by the group VIB elements of the periodic table is molybdenum. According to another preferred embodiment, the hydrogenating/dehydrogenating element selected from the group formed by the group VIB elements of the periodic table is tungsten.

Preferably, the non-precious elements of group VIII of the periodic table are selected from the group formed by cobalt and nickel, used alone or in a mixture. According to a preferred embodiment, the hydrogenating/dehydrogenating element selected from the group formed by non-precious group VIII elements is cobalt. According to another preferred embodiment, the hydrogenating/dehydrogenating element selected from the group formed by non-precious group VIII elements is nickel.

Preferably, said catalyst comprises at least one metal of group VIB in combination with at least one non-precious metal of group VIII, the non-precious group VIII elements being selected from the group formed by cobalt and nickel, used alone or in a mixture, and the group VIB elements being selected from the group formed by tungsten and molybdenum, used alone or in a mixture.

Advantageously, the following combinations of metals are used: nickel-molybdenum, cobalt-molybdenum, nickel-tungsten, cobalt-tungsten, the preferred combinations being: nickel-molybdenum, cobalt-molybdenum, cobalt-tungsten, nickel-tungsten and even more advantageously nickel-molybdenum and nickel-tungsten.

In the case where the catalyst comprises at least one metal of group VIB in combination with at least one non-precious metal of group VIII, the content of metal of group VIB, in oxide equivalent, is advantageously between 5 and 40 wt. % relative to the total weight of said catalyst, preferably between 10 and 35 wt. % and very preferably between 15 and 30 wt. % and the content of non-precious metal of group VIII, in oxide equivalent, is advantageously between 0.5 and 10 wt. % relative to the total weight of said catalyst, preferably between 1 and 8 wt. % and very preferably between 1.5 and 6 wt. %.

In another embodiment, the catalyst will contain an effective amount of at least one Group VIII metal. Group VIII metals include platinum, palladium, rhodium, osmium, iridium, ruthenium, cobalt, nickel, and iron. Noble metals (platinum, palladium, rhodium, osmium, iridium, and ruthenium) are preferred. Most preferably, the Group VIII metal is platinum or palladium.

The amount of Group VIII metal present in the catalyst will usually be an amount of at least about 0.01 percent by weight to about 3.0 percent by weight (based on the weight of the molecular sieve).

The hydrogenating/dehydrogenating phase may be incorporated into the catalyst by methods known in the art, such as by ion exchange, impregnation or by physically intimately admixing with the molecular sieve.

The unique structure of the catalysts produced according to the invention will be useful to a variety of fields, and should address certain limitations associated with conventional zeolites. It may benefit to all catalytic applications encountering diffusional limitations, especially in applications using bulky molecules. Among others catalytic cracking, fluidized catalytic cracking, hydrogenation, hydrodesulfurization, hydrocracking, hydroisomerization, oligomerization, alkylation processes.

Legend of the figures:
- Fig. 1:: SEM images of parent zeolite HY15 (left) and of recrystallized zeolite in presence of CTAB HY15-TMAOH-20 (Solid A) (right)

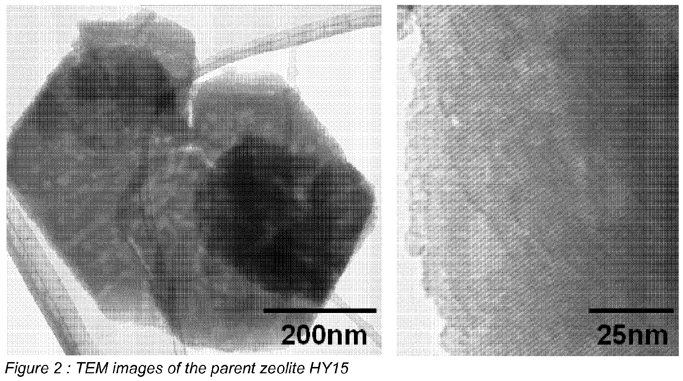

- Fig. 2:: TEM images of the parent zeolite HY15
- Fig. 3:: TEM images of recrystallized zeolite in presence of CTAB HY15-TMAOH-20 (Solid A)
- Fig. 4:: N₂ adsorption-desorption isotherms of parent zeolite HY15 and of recrystallized zeolite HY15-TMAOH-20 (Solid A)
- Fig. 5:: Pore size distribution(taken from adsorption branch) of parent zeolite HY15 and of recrystallized zeolite HY15-TMAOH-20 (Solid A)

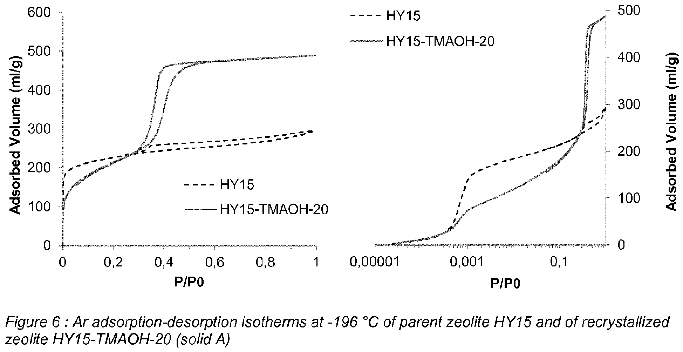

- Fig. 6:: Ar adsorption-desorption isotherms at -196 °C of parent zeolite HY15 and of recrystallized zeolite HY15-TMAOH-20 (Solid A)

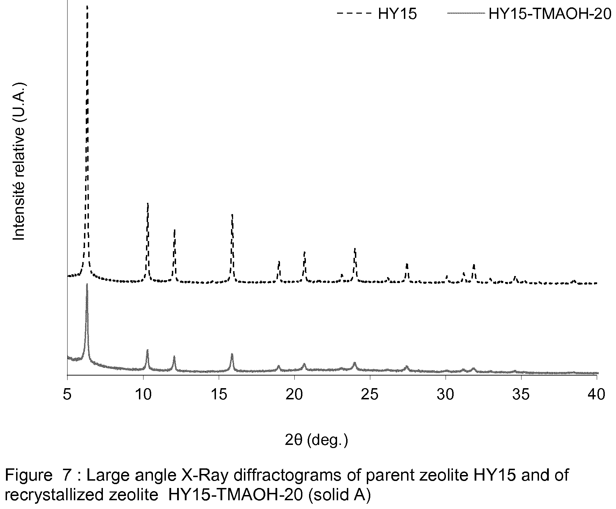

- Fig. 7:: Large angle X-Ray diffractograms of parent zeolite HY15 and of recrystallized zeolite HY15-TMAOH-20 (Solid A)

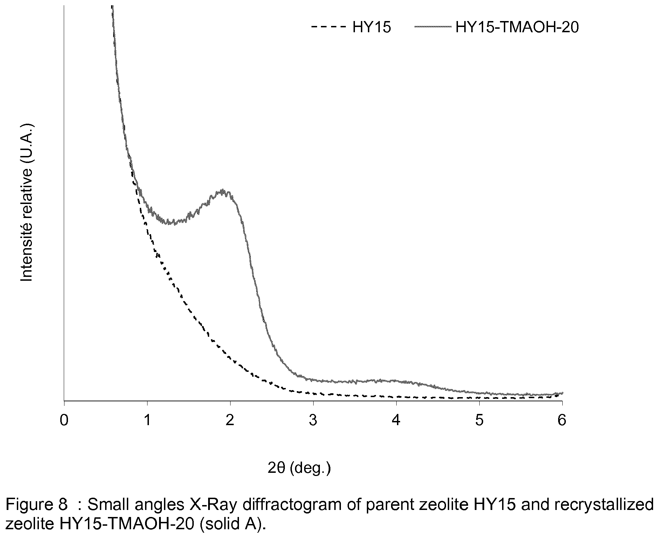

- Fig. 8:: Small angles X-Ray diffractogram of parent zeolite HY15 and recrystallized zeolite HY15-TMAOH-20 (Solid A)

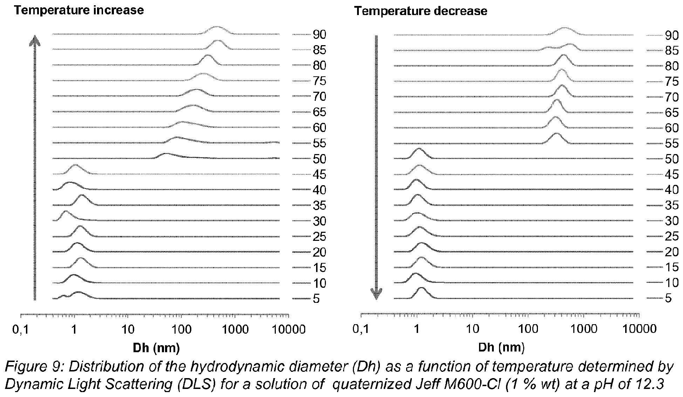

- Fig. 9:: Distribution of the hydrodynamic diameter (Dh) as a function of temperature determined by DLS for a solution of quaternized Jeff M600-Cl (1 % wt) at a pH of 12.3
- Fig. 10:: TEM images of the zeolite recrystallized in presence of quaternized Jeffamine ® Jeff M600-Cl (Solid B)
- Fig. 11 :: SEM images of the zeolite recrystallized in presence of quaternized Jeffamine ® Jeff M600-Cl (Solid B)
- Fig. 12 :: X-Ray diffractograms of zeolites recrystallized in presence of Jeff M600-Cl at 100°C (Solid D), 120°C (Solid C) and 150°C (Solid B)
- Fig. 13:: N₂ adsorption-desorption isotherms of zeolites recrystallized in presence of Jeff M600-Cl at 100°C (Solid D), 120°C (Solid C) and 150°C (Solid B) (left) and their corresponding pore size distribution (right)

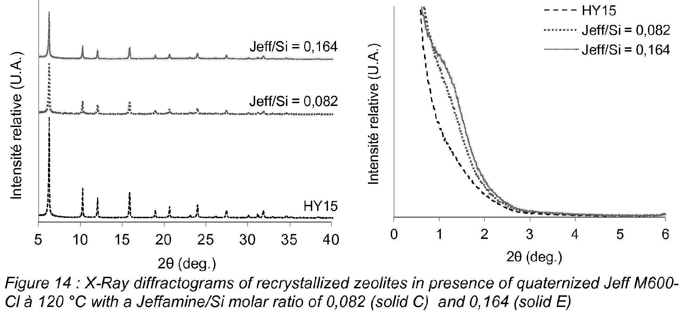

- Fig. 14 :: X-Ray diffractograms of recrystallized zeolites in presence of quaternized Jeff M600-Cl a 120°C with a Jeffamine®/Si molar ratio of 0.082 (Solid C) and 0.164 (Solid E)

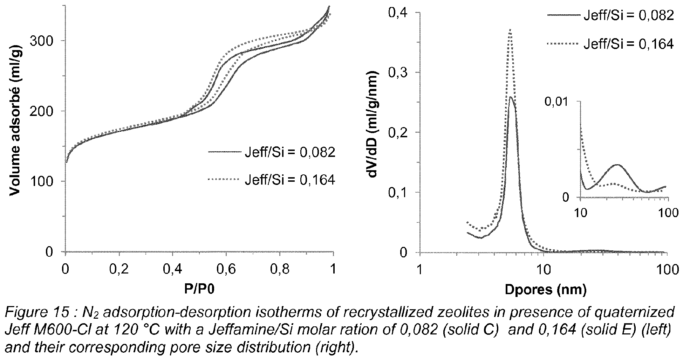

- Fig. 15:: N₂ adsorption-desorption isotherms of recrystallized zeolites in presence of quaternized Jeff M600-Cl at 120 °C with a Jeffamine®/Si molar ratio of 0.082 (Solid C) and 0.164 (Solid E) (left) and their corresponding pore size distribution (right)

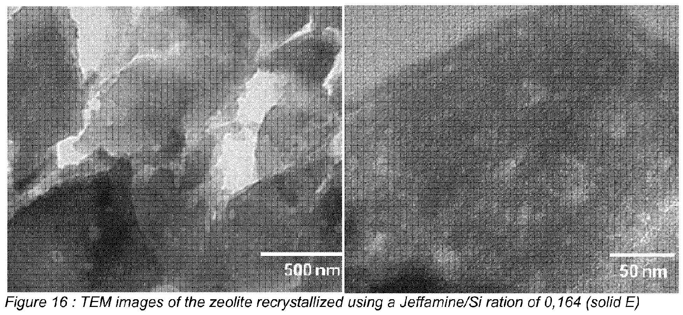

- Fig. 16 :: TEM images of the zeolite recrystallized using a Jeffamine®/Si ratio of 0.164 (Solid E)

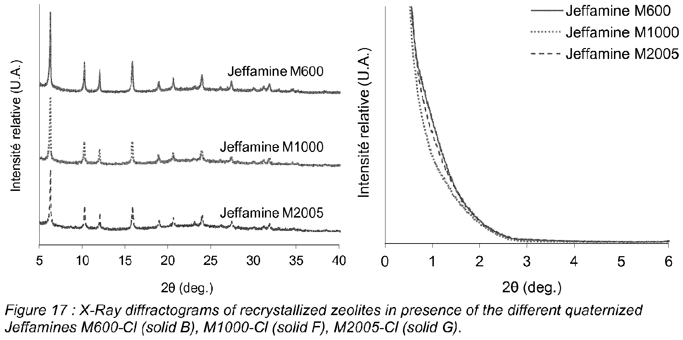

- Fig. 17 :: X-Ray diffractograms of recrystallized zeolites in presence of the different quaternized Jeffamines ® M600-Cl (Solid B), M1000-Cl (Solid F), M2005-Cl (Solid G)

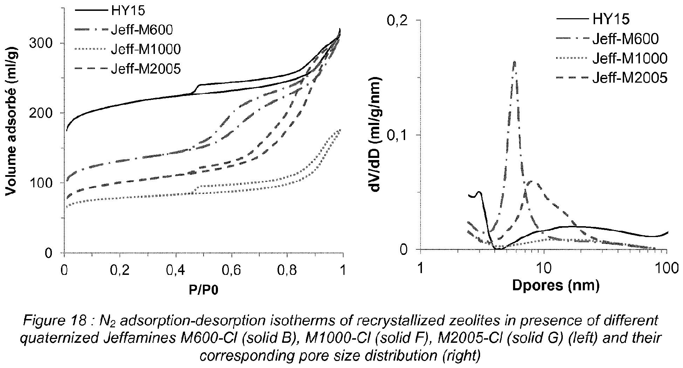

- Fig. 18 :: N₂ adsorption-desorption isotherms of recrystallized zeolites in presence of different quaternized Jeffamines ® M600-Cl (Solid B), M1000-Cl (Solid F), M2005-Cl (Solid G) (left) and their corresponding pore size distribution (right)
- Fig. 19:: N₂ adsorption-desorption isotherms of recrystallized zeolites obtained by recycling of the quaternized Jeffamine ® M600 (left) and their corresponding pore size distribution (right)
- Fig.20:: X-Ray Diffractograms of parent HY15 zeolite, of the recrystallized Y using M600 Jeffamine ® (solid I) and of the recrystallized Y using quaternized M600 Jeffamine ® (solid B)
- Fig.21:: N2 adsorption and desorption isotherms of parent HY15 zeolite, of the recrystallized Y using M600 Jeffamine ® (solid I) and of the recrystallized Y using quaternized M600-Cl Jeffamine ® (solid B)
- Fig.22:: top : TEM images of the recrystallized Y using M600 Jeffamine ® (solid I)
Bottom : TEM images of the recrystallized Y using quaternized M600 Jeffamine ® (solid B)
- Fig.23:: N2 physisorption isotherms of the CTAB recristallized Y zeolite before (solid J) and after (solid A) calcination

The following Examples illustrate the present invention without limiting its scope.

In these Examples, the following abbreviations are used :
- CTAB: : hexadecyltrimethylammonium bromide
- TAMOH: : tetramethylammonium hydroxide
- PEO: : poly(ethylene oxide)
- PPO: : poly(propylene oxide)
- EO: : ethylene oxide
- PO: : propylene oxide
- DLS: : dynamic light scattering
- LCST: : lower critical solution temperature (°C)
- SEM: : scanning electron microscopy
- TEM: : transmission electron microscopy
- S_{BET}: : apparent surface area (specific surface area)
- V_{micro}: : micropore volume (mL/g)
- Vₘₑₛₒ: : mesopore volume (mL/g)
- S_{mic}: : micropore surface area (m²/g)
- Sₘₑₛ: : mesopore surface area (m²/g)
- Vₜₒₜ: : total pore volume (mL/g)
- V_{large meso}: : volume of the large mesopores (above 10nm)
- LOI: : loss on ignition (%wt)

### Zeolites :

### (a) Parent zeolite

- HY15:: a commercial Y zeolite in protonated form having the FAU structure and a Si/AI ratio of 15 (CBV720 post-treated by dealumination, Zeolyst)

The main characteristics of HY15 parent zeolite are gathered in the table below

| Solids | LOI^{a} (%wt) | Si/Al^{b} | Nitrogen adsorption | | | | | |
|---|---|---|---|---|---|---|---|---|
| | | | V_{micro} (ml/g) | V meso (ml/g) | V large meso (ml/g) | V tot (ml/g) | S BET (m²/g) | Dpores^{c} (nm) |
| HY15 | 3 | 16.1 | 0.218 | 0.164 | 0.086 | 0.468 | 814 | 25 |

To be stressed, the presence of disordered mesopores already present in the zeolite crystals.

### (b) Recrystallized zeolite

- Solid A :: the solid obtained by the recrystallization of HY15 using CTAB as organic template
- Solids B to H: : the solids obtained by the recrystallization of HY15 using mesopore templating agent according to the present invention.

A polymer group, called Jeffamine ®, are statistic copolymers of PEO and PPO. Different types of functionnalization (mono-, di-, tri- primary amines) are proposed. All these polymers are cheap commercially available polymers.

The size of the PEO and PPO chain may vary as well as the relative proportion of the PEO/PPO ratio, leading to a large variety of commercially available Jeffamines ®, the molecular size of which varying from 140 to 5000g/mol. The relative proportion of EO and PO units in the polymer chain is of key importance as it determines the hydrophilic/hydrophobic balance as well as the LCST. Jeffamines ® are thermosensitive copolymers.

**Table 1 : Characteristics of the Jeffamine ® used**

| | Reference | Approximative molecular weight (g/mol) | EO/PO molar ratio | Hydrophilic/ hydrophobic balance |
|---|---|---|---|---|
| 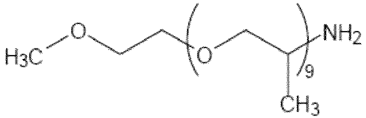 | **Jeffamine** ® **M600** | 600 | 1/9 | 2 |
| 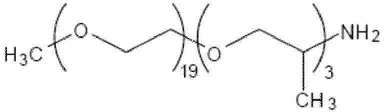 | **Jeffamine** ® **M1000** | 1000 | 19/3 | 17 |
| 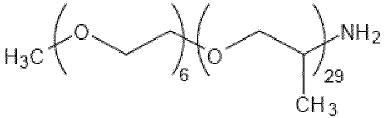 | **Jeffamine** ® **M2005** | 2000 | 6/29 | 2.8 |

### Characterization techniques :

The powder X-ray diffraction patterns were measured on a Bruker D8 Advance diffractometer (weighted mean CuKα radiation at λ = 1.541838 Å) with a Bragg-Brentano geometry and equipped with a Bruker Lynx Eye detector. The data were recorded in the range 0.5-6° and 5-35° 2θ with an angular step size of 0.0197° and a counting time of 0.1 s per step.

The SEM observations were performed by using a Hitachi S4800 microscope with a resolution of 1 nm. The samples were first covered with platinum.

The TEM experiments were performed by using a JEOL 1200 EX II electron microscope operated at 100 kV with a resolution of 0.5 nm. The samples were prepared by dispersion in ethanol and deposition onto a carbon-coated copper grid. The observations of thin slices of 70 nm thickness were also obtained by ultramicrotomy of the sample embedded in a polymer resin (LR White) then deposited on a copper grid.

The N₂ and Ar adsorption-desorption isotherms were measured at -196°C on a Micromeritics TriStar 3000 instrument and an ASAP 2020 instrument. Prior to each measurement, the samples were outgassed in vacuum at 250°C for at least 6 hours (for N₂) and at least 12 hours (for Ar).

The apparent surface areas (S_{BET}) were determined according to the BET model from the adsorption branches. The micro- and mesopore volumes (Vmic, Vmes) together with the micro- and mesopore surface areas (Smic, Smes) for nitrogen and argon were calculated using the αₛ-plot method, with the non porous silica Aerosil 200 as a reference adsorbent. The total pore volumes (Vtot) were evaluated from the amount adsorbed at a relative pressure of about 0.99 using the liquid nitrogen (or argon) density at 77K.

The Dynamic Light Scattering (DLS) measurements were performed with a Zetasizer Nano ZS apparatus from Malvern Instruments equipped with a helium-neon laser of 4 mW at 632.8 nm and a backscatter detector located at 173 ° to the incident beam. The temperature can be set from 5 to 90 ° C with precision (+/- 0.1°C) using thermoelectric Peltier cells. The samples were filtered through nylon syringe filter 0.2 µm, directly into the quartz measurement cell (1 cm) previously dried. The cell is closed with a Teflon stopper and stabilized at the desired temperature for 2 minutes. Parameters such as the number of accumulations or the depth measurement in the vessel are automatically optimized by the device. This technique allows determining the size of objects in solution based on their Brownian motion by studying the distribution of a coherent monochromatic incident beam (laser). These objects may be nano particles or polymers in solution, assembled or not in the form of micelles or aggregates.

### Example 1 : Preparation of chloride-quaternized Jeffamine ® M600

### (a) Preparation of iodide quaternized Jeffamine ®

The quaternization of the primary amine of the Jeffamine ® has been performed by reacting an excess of iodomethane CH₃I according to the synthesis protocol of Cope et al. [A.C.Cope, JACS, 1960, 82, 4651-4655].

In a 500 ml vessel equipped with a cooler, 41.5g (0.07mol) of Jeffamine ® M600 are dissolved in 300 ml of methanol in presence of 34g (0.4mol) of sodium bicarbonate. 30g (0.21mol) of iodomethane CH₃I are added under stirring before heating under reflux during 72 hours away from light. After 24 hours, 30g (0.21 mol) of additional iodomethane CH₃I are added to the reaction medium. After complete cooling, the water traces are removed by adding anhydrous magnesium sulfate and the solution is filtered to remove the precipitated salts. The filtrate is evaporated at 80°C under vacuum to obtain a visqueous ambarino yellow liquid, containing precipitated salts. A small amount of chloroform is added to dissolve the polymer and insoluble salts are removed by cold filtration. The solvent is then evaporated to recover the Jeffamine ® iodide quaternized M600.

The yield of the quaternization is 95% for the iodide quaternized Jeffamine ® M600.

### (b) Preparation of chloride quaternized Jeffamine ®

20g (0.026mol) of iodide quaternized Jeffamine ® from step (a) were dissolved in 200 ml of water. 20 ml of Amberlyst IRA400 resin (1.4meq/ml) under chloride form were first washed with water before adding the solution of iodide quaternized Jeffamine ®. The reactional medium is then heated up to 50°C under stirring during 24 hours. After cooling down, the suspension is filtered and the filtrate is subsequently processed with a flowrate of 2 ml/min on a column loaded with 20 ml of Amberlyst IRA400 resin previously washed. The recovered solution is evaporated at 90°C under vacuum to remove water. The remaining chloride quaternized Jeffamine ® is then dissolved in absolute ethanol to remove any water traces by azeotropic evaporation under vacuum. The obtained chloride quaternized Jeffamine ® is a white waxy solid.

### (c) Micellar behavior of chloride-quaternized Jeffamine ® in basic medium

The polymeric chain of Jeffamine ® is thermosensitive. At low temperature, the quaternized Jeffamine ® M600 is soluble under the form of unimer (∼1nm) in solution. Starting from 50°C, the hydrophobicity of the polymer chain is high enough to generate a surfactant behavior so that unimers assemble to form small objects. With temperature increase, the chain becomes more and more hydrophobic and micelles turn into aggregates of around 50nm from 50°C up to 530 nm at 90°C as determined by DLS. No precipitation is observed as micelles are stabilized by their positive charged corona. The micelles formation is reversible as by decreasing the temperature back below 50°C the Jeffamine ® unimers are completely dissociated in solution.

For the quaternized Jeffamine ® M600, micelles are formed from 75°C and the size of the micelles grows from 75°C up to 90°C.

### Example 2 (comparative) : Preparation of Solid A by recrystallization of HY15 zeolite using CTAB as organic template

The recrystallization of the parent sample HY15 zeolite has been performed according to the synthesis protocol described by Ying. et al. [J.Y.Ying, US2007244347] : 1.67g of the HY15 zeolite are mixed together at room temperature with 50 ml of a 0.09M TMAOH solution under vigourous stirring in a 120 ml autoclave. 0.83g of CTAB are then added to the suspension maintained under stirring during 20 min. The mixture has a CTAB/Si molar ratio of 0.082. The autoclave is then hermetically closed and the reactional medium submitted to static hydrothermal conditions at 150°C under autogeneous pressure during 20 hours. After quick cooling down of the autoclave in a water bath, the solid is recovered by filtration and washed using demineralized water until a neutral pH is reached. The solid is then dried overnight in an oven at 80°C. The whole solid porosity is recovered by complete calcination of the contained organic species (CTAB and TMAOH) in a tubular oven at 550°C (1°C/min) during 8 hours under air (200 ml/h).

The characteristics of the parent zeolite Solid A as obtained are reported in Table 2.

**Table 2 : Characteristics of parent zeolite HY15 and recrystallized zeolite in presence of CTAB (Solid A)**

| **Samples** | **LOI^{a} (%)** | **Cristallite size^{b} (nm)** | **Si/Al^{c}** | **Nitrogen adsorption** | | | | |
|---|---|---|---|---|---|---|---|---|
| | | | | V_{micro} | Vₘₑₛₒ^{d} | V_{largemeso} | Vₜₒₜ | S_{BET} |
| **HY15** | 3 | 57 | 16.1 | 0.218 | 0.164 | 0.086 | 0.468 | 814 |
| **Solid A** | 34 | 53 | 15.0 | 0.094 | 0.529 | 0.014 | 0.636 | 818 |

| | | | | | | | | |
|---|---|---|---|---|---|---|---|---|
| ^{a} determined by ATG between 150 and 900 °C ; ^{b} determined by XRD ; ^{c} determined by EDX ; ^{d} between 2 and 10 nm. | | | | | | | | |

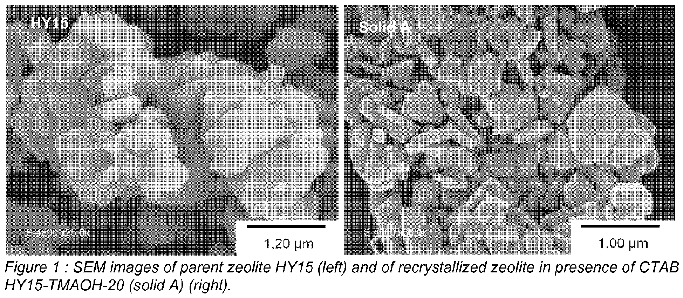

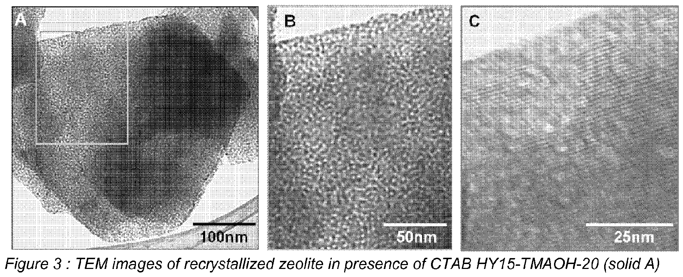

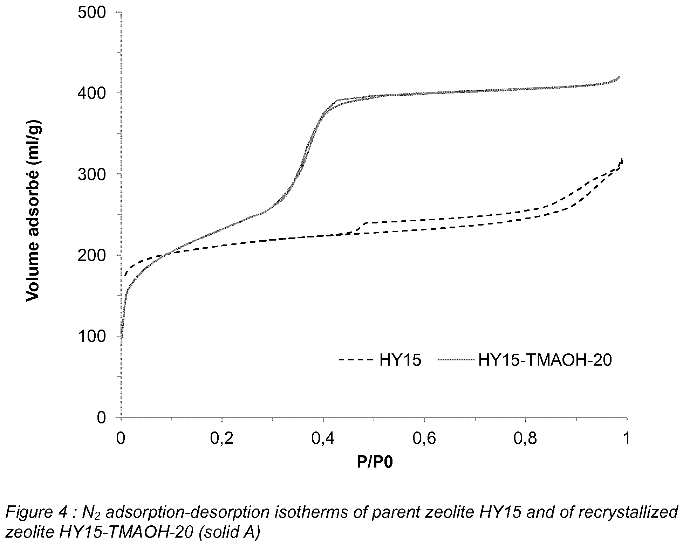

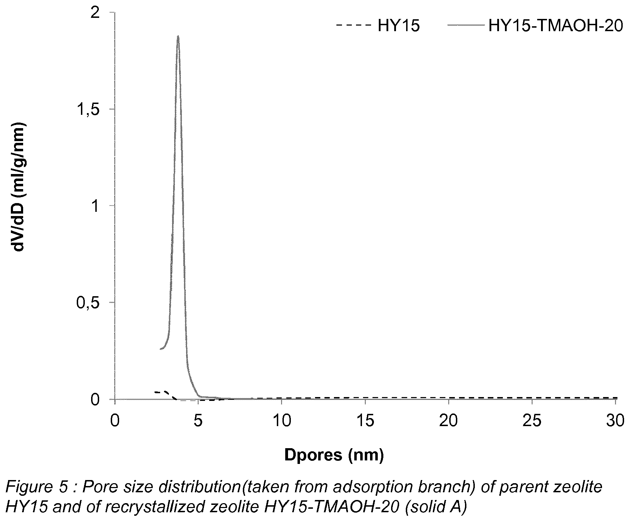

The recrystallization of zeolite HY15 in the presence of the CTAB is efficient to generate mesoporosity inside the zeolite, while preserving the initial crystal shape. The recrystallized materials possess a hierarchical structure with long range zeolite crystallinity and a high mesoscopic order of the mesopores located in the same crystals (Figure 1 and Figure 3). A bimodal interconnected pore system was obtained with narrow size distributions of micropores (0.74 mm - 7.4 Å) and mesopores (4.3mm - 43 Å) (Figures 4 et 5).

### Example 3 : Preparation of Solid B by recrystallization of HY15 zeolite using chloride quaternized Jeffamine ® M600 as organic template

### (a) Preparation of the reaction mixture

0.462g (0.682mmol) of chloride quaternized Jeffamine ® M600 is dissolved under stirring at room temperature in 15 ml of 0.09M TMAOH solution during 10 min in a 20 ml autoclave.

0.5g of HY15 are then added to the solution under stirring during 20 min. The amount of quaternized Jeffamine ® M600 has been determined by keeping a N⁺/Si ratio of 0.082.

### (b) Preparation of Solid B

The autoclave is then hermetically closed and the reactional medium submitted to static hydrothermal conditions at 150°C under autogeneous pressure during 20 hours. After quick cooling down of the autoclave in a water bath, the solid is recovered by filtration and washed using demineralized water until a neutral pH is reached. The solid is then dried overnight in an oven at 80°C. The solid porosity is recovered by washing or calcination of the contained organic matter in a tubular oven at 550°C (1°C/min) during 8 hours under air (200 ml/h).

### (c) Characterization of Solid B

The characteristics of the Solid B are reported in Table 3.

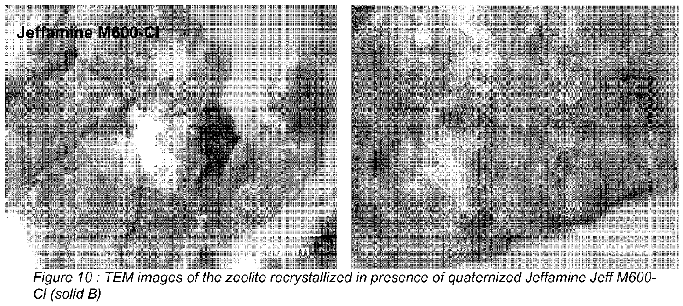

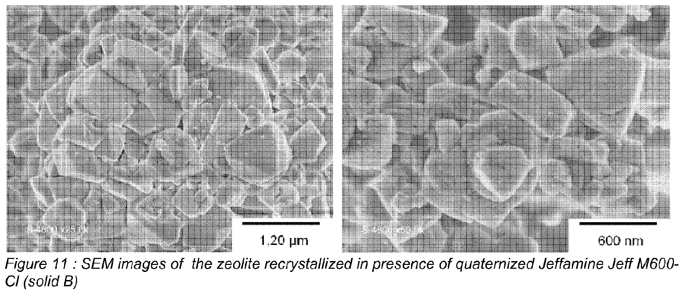

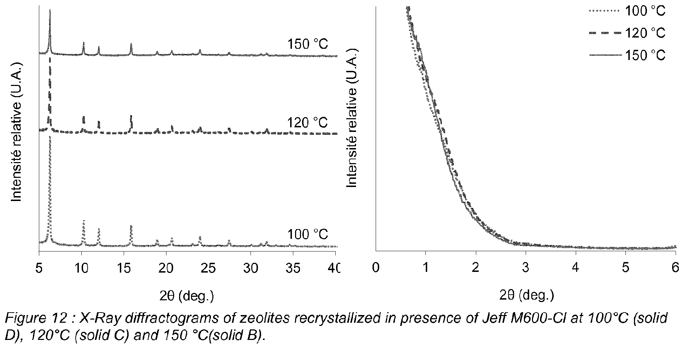

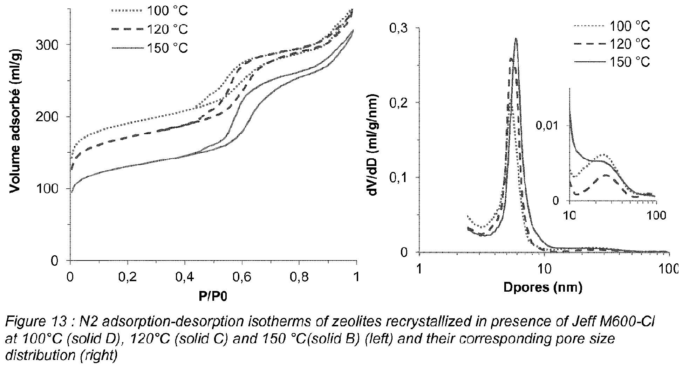

In Figure 12, large-angles XRD clearly shows that the Y zeolitic structure is preserved ; using small-angles XRD, the presence of a shoulder at around 1°2θ indicates that the recrystallized solid is mesostructured. Such a mesostructure is confirmed on N₂ adsorption isotherms (Figure 13) exhibiting a strong adsorption at a relative pressure comprised between 0.5 and 0.7. The corresponding mesopores have a narrow distribution centered around 5.9 nm, representing a volume of 0.274 ml/g, corresponding to an increase of 67% of the mesoporous volume compared to the parent HY15 zeolite. These results are confirmed by TEM images showing the formation of a homogeneous vermicular mesoporous phase in the solid (Figure 10). Microporosity and mesoporosity are intimately connected suggesting an excellent interconnectivity between the two pore systems and bringing the proof of the true hierarchical porosity of the recrystallized zeolite crystals. The MEB images (Figure 11) show that the typical crystalline shape and size of the precursor zeolite Y are maintained after the recrystallization treatment, thus confirming also the pseudomorphic character of the recrystallization.

### Example 4 : Preparation of Solid C by recrystallization of Y zeolite using chloride quaternized Jeffamine ® M600 as organic template

### (a) Preparation of the reaction mixture

The procedure is the same as in Example 3 (a).

### (b) Preparation of Solid C

The procedure is the same as in Example 3 (b) except that the reaction mixture was subjected to 120°C instead of 150°C.

### (c) Characterization of Solid C

The characteristics of the Solid C are reported in Table 3.

As for Solid B, the same conclusions can be drawn : conservation of the structure of the parent zeolite Y ; formation of a homogeneous vermicular mesoporous phase in the solid ; mesopores have a narrow distribution centered around 5.5 nm ; microporosity and mesoporosity are intimately connected suggesting an excellent interconnectivity between the two pore systems and bringing the proof of the true hierarchical porosity of the recrystallized zeolite crystals.

### Example 5 : Preparation of Solid D by recrystallization of HY15 zeolite using chloride quaternized Jeffamine ® M600 as organic template

### (a) Preparation of the reaction mixture

The procedure is the same as in Example 3 (a).

### (b) Preparation of Solid D

The procedure is the same as in Example 3 (b) except that the reaction mixture was subjected to 100°C instead of 150°C.

### (c) Characterization of Solid D

The characteristics of the Solid D are reported in Table 3.

As for Solid B and C, the same conclusions can be drawn : conservation of the structure of the parent zeolite Y ; formation of a homogeneous vermicular mesoporous phase in the solid ; mesopores have a narrow distribution centered around 5.5 nm ; microporosity and mesoporosity are intimately connected suggesting an excellent interconnectivity between the two pore systems and bringing the proof of the true hierarchical porosity of the recrystallized zeolite crystals.

### Example 6 : Preparation of Solid E by recrystallization of Y zeolite using chloride quaternized Jeffamine ® M600 as organic template

### (a) Preparation of the reaction mixture

0.924g (1.36mmol) of chloride quaternized Jeffamine ® M600 is dissolved under stirring at room temperature in 15 ml of 0.09M TMAOH solution during 10 min in a 20 ml autoclave. 0.5g of HY15 zeolite are then added to the solution under stirring during 20 min. The amount of quaternized Jeffamine ® M600 has been determined by keeping a N⁺/Si ratio of 0.164.

### (b) Preparation of Solid E

The procedure is the same as in Example 4 (b).

### (c) Characterization of Solid E

The characteristics of the Solid E are reported in Table 3.

As for Solid B, C and D, the same conclusions can be drawn : conservation of the structure of the parent zeolite Y ; formation of a homogeneous vermicular mesoporous phase in the solid ; conservation of the Y zeolitic structure ; mesopores have a narrow distribution centered around 5.5 nm ; microporosity and mesoporosity are intimately connected suggesting an excellent interconnectivity between the two pore systems and bringing the proof of the true hierarchical porosity of the recrystallized zeolite crystals.

### Example 7 : Preparation of Solid F by recrystallization of HY15 zeolite using chloride quaternized Jeffamine ® M1000 as organic template

### (a) Preparation of reaction mixture

0.74g (0.682mmol) of chloride quaternized Jeffamine ® M1000 is dissolved under stirring at room temperature in 15 ml of 0.09M TMAOH solution during 10 min in a 20 ml autoclave. 0.5g of HY15 zeolite are then added to the solution under stirring during 20 min. The amount of quaternized Jeffamine ® M1000 has been determined by keeping a N⁺/Si ratio of 0.082.

### (b) Preparation of Solid F

The autoclave is then hermetically closed and the reactional medium submitted to static hydrothermal conditions at 150°C under autogeneous pressure during 20 hours. After quick cooling down of the autoclave in a water bath, the solid is recovered by filtration and washed using demineralized water until a neutral pH is reached. The solid is then dried overnight in an oven at 80°C. The solid porosity is recovered by washing or calcination of the organic matter contained in a tubular oven at 550°C (1°C/min) during 8 hours under air (200 ml/h).

### (c) Characterization of Solid F

The characteristics of the Solid F are reported in Table 3. The use of chloride quaternized Jeffamine ® M1000 does not allow to create a mesostructure in the HY15 zeolite : the N2 isotherms of solid F present the same trend as the one of the parent HY15, indicating a similar pore size distribution. The Jeffamine ® M1000 having a high hydrophilic/hydrophobic balance, its corresponding LCST is not fitting with the recrystallization conditions used.

### Example 8 : Preparation of Solid G by recrystallization of HY15 zeolite using quaternized Jeffamine ® M2005 as organic template

### (a) Preparation of the reaction mixture

1.42g (0.682mmol) of chloride quaternized Jeffamine ® M2005 is dissolved under stirring at room temperature in 15 ml of 0.09M TMAOH solution during 10 min in a 20 ml autoclave. 0.5g of HY15 zeolite are then added to the solution under stirring during 20 min. The amount of quaternized Jeffamine ® M2005 has been determined by keeping a N⁺/Si ratio of 0.082.

### (b) Preparation of Solid G

The procedure is the same as in Example 5 (b).

### (c) Characterization of Solid G

The characteristics of the Solid G are reported in Table 3.

Here again, the formation of a true hierarchical porosity of the recrystallized zeolite crystals is confirmed having the following characteristics : conservation of the structure of the parent zeolite Y ; formation of a homogeneous vermicular mesoporous phase in the solid ; the distribution of mesopores is this time larger than for Solid B with two main contributions centered respectively around 8 and 15 nm ; microporosity and mesoporosity are intimately connected. It is also the proof that even by using recyclable structuring agents, it is possible to tune the size of the mesopores of the mesostructure by an accurate choice of the structuring agent.

### Example 9 : Preparation of Solids H to Hviii by recrystallization of HY15 zeolite using chloride quaternized Jeffamine ® M600 and different extraction conditions

### (a) Preparation of the reaction mixture

0.924g (1.36mmol) of chloride quaternized Jeffamine ® M600 is dissolved under stirring at room temperature in 15 ml of 0.09M TMAOH solution during 10 min in a 20 ml autoclave. 0.5g of HY15 zeolite are then added to the solution under stirring during 20 min. The amount of chloride quaternized Jeffamine ® M600 has been determined by keeping a N⁺/Si ratio of 0.164.

### (b) Preparation of the solids H to Hviii

The autoclave is then hermetically closed and the reactional medium submitted to static hydrothermal conditions at 120°C under autogeneous pressure during 20 hours. After quick cooling down of the autoclave in a water bath, different routes have been investigated :
- **Solid H** :: the solid is recovered by filtration and washed using demineralized water until a neutral pH is reached. The solid is then dried overnight in an oven at 80°C. The solid porosity is recovered by calcination of the contained organic matter in a tubular oven at 550°C (1°C/min) during 8 hours under air (200 ml/h).
- **Solid Hi** :: the solid is recovered by filtration at 25°C without washing. The solid is then dried overnight in an oven at 80°C and its characteristics are reported in Table 4.
- **Solid Hii to Hiv :**: the solids are recovered by filtration at 25°C followed by a washing step performed respectively at 0°C, 27°C and 40°C. The washing step is performed by introducing 100 mg of solid in 15 ml of demineralized water in a batch under stirring during 24 hours respectively at 0°C, 27°C and 40°C. The recovered solids are then dried overnight in an oven at 80°C and their characteristics are reported in Table 4.
- **Solid Hv to Hvii** :: the solids are recovered by filtration at 25°C followed by a washing step performed at 27°C. The washing step is performed by introducing in a batch under stirring during 24 hours 100 mg of solid in 15 ml of solutions containing respectively 0.1 M of HNO₃ (nitric acid), NH₄OH (ammonium hydroxyde), NH₄NO₃ (ammonium nitrate). The recovered solids are then dried overnight in an oven at 80°C and their characteristics are reported in Table 4.
- **Solid Hviii** :: the solids are recovered by filtration at 25°C followed by a washing step performed at 27°C. The washing step is performed by introducing in a batch under stirring during 24 hours 100 mg of solid in 15 ml of pure methanol. The recovered solids are then dried overnight in an oven at 80°C and their characteristics are reported in Table 4.

**Table 3 : Characteristics of HY15, the parent zeolite and recrystallized Y using chloride quaternized Jeffamines ® under different synthesis conditions**

| Solids | LOI^{a} (%wt) | Si/Al^{b} | Nitrogen adsorption | | | | | |
|---|---|---|---|---|---|---|---|---|
| | | | V_{micro} (ml/g) | Vₘₑₛₒ (ml/g) | V_{large meso} (ml/g) | Vₜₒₜ (ml/g) | S_{BET} (m²/g) | Dₚₒᵣₑₛ^{c} (nm) |
| HY15 | 3 | 16.1 | 0.218 | 0.164 | 0.086 | 0.468 | 814 | 25 |
| B | 16 | 16.1 | 0.114 | 0.274 | 0.084 | 0.472 | 486 | 5.9 |
| C | 18 | 16.2 | 0.159 | 0.285 | 0.076 | 0.52 | 645 | 5.5 |
| D | 19 | 21.2 | 0.191 | 0.252 | 0.079 | 0.522 | 723 | 5.3 |
| E | 19 | 16.7 | 0.163 | 0.301 | 0.038 | 0.502 | 656 | 5.3 |
| F | 15 | | 0.098 | 0.058 | 0.104 | 0.260 | 303 | 10 |
| G | 34 | | 0.094 | 0.146 | 0.222 | 0.462 | 378 | 8-15 |

| | | | | | | | | |
|---|---|---|---|---|---|---|---|---|
| ^{a}: determined by ATG between 150 and 900°C ^{b}: determined by EDX ^{c}: diameter of main pores | | | | | | | | |

**Table 4 : Characteristics of recrystallized zeolite in presence of quaternized Jeffamine ® M600 treated with different solutions to remove the organic structuring agent**

| **Solids** | **Treatment** | | **LOI^{b} (%)** | **Weight proportion^{c} (%)** | | **Nitrogen adsorption** | | | | | |
|---|---|---|---|---|---|---|---|---|---|---|---|
| | Conditions | T (°C) | | Carbon | Nitrogen | V_{micro} (ml/g) | Vₘₑₛₒ^{e} (ml/g) | V_{large meso} (ml/g) | Vₜₒₜ (ml/g) | S_{BET} (m²/g) | Dₚₒᵣₑₛ (nm) |
| **H** | Calcination | 550 | 4 | 0 | 0 | 0.163 | 0.301 | 0.038 | 0.502 | 656 | 5.3 |
| **Hi** | Filtration^{a} | 25 | 29 | 16.1 | 1.6 | 0 | 0.056 | 0.018 | 0.074 | 44 | 4.5 |
| **Hii** | Water | 0 | 21 | 11 | 1.2 | 0 | 0.173 | 0.031 | 0.204 | 122 | 4.9 |
| **Hiii** | Water | 27 | 20 | 10.7 | 1.2 | 0 | 0.183 | 0.034 | 0.217 | 128 | 5.2 |
| **Hiv** | Water | 40 | 21 | 11.4 | 1.1 | 0 | 0.179 | 0.036 | 0.215 | 125 | 5.2 |
| **Hv** | HNO₃0.1 M | 27 | 17 | 9.2 | 0.8 | 0.021 | 0.233 | 0.031 | 0.285 | 225 | 5.3 |
| **Hvi** | NH₄OH 0.1 M | 27 | 19 | 10.3 | 1.1 | 0 | 0.186 | 0.050 | 0.237 | 134 | 5.4 |
| **Hvii** | NH₄NO₃ 0.1 M | 27 | 19 | 9.8 | 1.2 | 0 | 0.189 | 0.036 | 0.225 | 138 | 5.3 |
| **Hviii** | CH₃OH | 27 | 22 | 13.3 | 1.1 | 0.009 | 0.202 | 0.027 | 0.228 | 148 | 5.3 |

| | | | | | | | | | | | |
|---|---|---|---|---|---|---|---|---|---|---|---|
| ^{a}filtration without washing ; ^{b} determined by ATG between 150 and 900 °C ; ^{c} determined by elemental analysis ; ^{d} determined by EDX ; ^{e} mesopores < 10 nm ; | | | | | | | | | | | |

After recrystallization of the zeolite, during the cooling down of the solution, micelles of chloride quaternized Jeffamine ® M600 disassemble within the mesopores of the material.

A single filtration at room temperature without washing (Solid Hi) allows extracting 30% of the structuring agent present in the recrystallized zeolite.

A washing by water at room temperature allows to extract 30% additional structuring agent (Solid Hii), bringing to 60% the total amount of extracted quaternized M600 Jeffamine ® from the material. 73% of the mesoporous volume is then recovered in mild conditions without calcining the material. The temperature of the water used during the washing does not seem to have a strong impact on the amount of organic material extracted (Table 5).

The use of an acid solution (Solid Hv) improves furthermore the extraction by exchanging TMA⁺ cations with H⁺ : by 90% of the mesoporous volume by 15% of the microporous volume become accessible.

The results obtained with methanol as washing solvent (Solid Hviii) are better than those obtained using NH₄OH (Solid Hvi) or NH₄NO₃ (Solid Hvii) containing solution, but remain not so good as with HNO₃ solution (Solid Hv).

The results obtained here clearly show the feasibility of the extraction of the structuring agents from the porosity of the mesoporized zeolites.

**Table 5 : Accessible volumes (recalculated per gram of aluminosilicate) of the different solids expressed in % versus the reference material (Solid H)**

| **Solids** | **Accessible volume (%)** | | | |
|---|---|---|---|---|
| | **V_{micro}** | **Vₘₑₛₒ** | **V_{large meso}** | **Vₜₒₜ** |
| **H : Calcined** | 100 | 100 | 100 | 100 |
| **Hi : Filtrated at 25°C** | 0 | 25 | 64 | 20 |
| **Hii : Water 0°C** | 0 | 70 | 99 | 49 |
| **Hiii : Water 27°C** | 0 | 73 | 107 | 52 |
| **Hiv : Water 40°C** | 0 | 72 | 115 | 52 |
| **Hv: HNO₃ 0.1 M** | 15 | 90 | 94 | 66 |
| **Hvi : NH₄OH 0.1 M** | 0 | 73 | 156 | 56 |
| **Hvii : NH₄NO₃ 0.1 M** | 0 | 74 | 112 | 53 |
| **Hviii : CH₃OH** | 7 | 83 | 87 | 56 |

### Example 10 : Recycling of quaternized Jeffamine ® in other recrystallization synthesis according to the invention - (Recrist.1./Recrist.2/Recrist.3/Recrist.4)

The same recrystallization protocol as for Solid H was used (Example 9).

After cooling down in an ice bath, the suspension is filtered at room temperature and the solid is rinsed with 3 ml of demineralized water. The solid is dried at 80°C (Recrist.1).

The filtrate is recovered and before being reused in further recrystallization experiences, the pH of the filtrate is adjusted to 13, corresponding to the pH of the initial recrystallization solution before the hydrothermal treatment by adding drops of TMAOH (25% solution). The parent zeolite HY15 is then added and the system is stirred during 20 minutes followed by the hydrothermal treatment at 120°C. After cooling down and filtration at room temperature, the second solid is recovered (Recrist.2). The recycling/recrystallization protocol is repeated two more times using the same solution of quaternized Jeffamine ® M600. Two additional recrystallized zeolite samples are obtained (Recrist.3/ Recrist.4).

The recrystallization yields are high comprised between 92 and 94%.

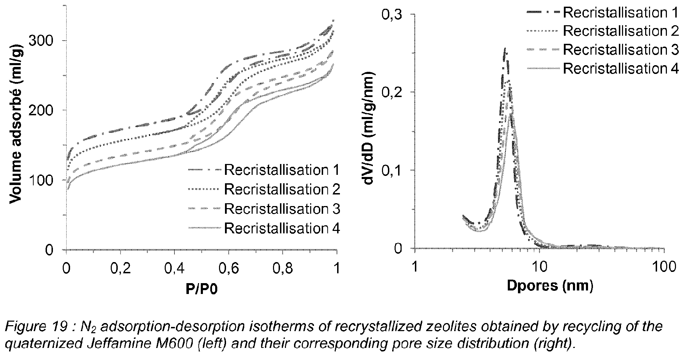

The characteristics of the recrystallized zeolites are gathered Table 6 and Figure 19. These results clearly show that the recycling of the solution containing the quaternized Jeffamine-CI is possible without any intermediate purification. According to the present invention, it is demonstrated that the use of recoverable and recycled structuring agents under mild conditions leads to the synthesis of hierarchical zeolite materials having the following characteristics :
- conservation of the structure of the parent zeolite Y ;
- formation of a homogeneous vermicular mesoporous phase in the solid ;
- mesopores have a narrow distribution centered around 5.5nm ;
- microporosity and mesoporosity are intimately connected.

**Table 6 : Characteristics of the recrystallized zeolite obtained by recycling of quaternized Jeffamine ® M600 solution**

| **Solid** | **LOI^{a} (%)** | **Weight proportion^{b} (%)** | | **Si/Al^{c}** | **Nitrogen adsorption** | | | | | |
|---|---|---|---|---|---|---|---|---|---|---|
| | | Jeff M600-Cl | TMAOH | | V_{micro} | Vₘₑₛₒ^{d} | V_{largemeso} | Vₜₒₜ | S_{BET} | Dₚₒᵣₑₛ |
| **HY15** | 3 | 0 | 0 | 16.1 | 0.218 | 0.164 | 0.086 | 0.468 | 814 | 25 |
| **Recrist. 1** | 25 | 18.4 | 5.6 | 16.2 | 0.171 | 0.259 | 0.056 | 0.486 | 658 | 5.3 |
| **Recrist. 2** | 20 | 10.5 | 7.2 | 18.4 | 0.147 | 0.261 | 0.051 | 0.459 | 590 | 5.4 |
| **Recrist. 3** | 19 | 7.4 | 8.6 | 17.0 | 0.120 | 0.245 | 0.056 | 0.421 | 504 | 5.7 |
| **Recrist. 4** | 19 | 6.4 | 9.1 | 17.4 | 0.107 | 0.229 | 0.051 | 0.387 | 455 | 5.8 |

| | | | | | | | | | | |
|---|---|---|---|---|---|---|---|---|---|---|
| ^{a} determined by ATG between 150 and 900 °C ; ^{b} determined by elemental analysis ; ^{c} determined by EDX ; ^{d} mesopores < 10 nm | | | | | | | | | | |

### Example 11 : Preparation of Solid I by recrystallization of HY15 zeolite using non quaternized Jeffamine M600 as organic template - comparative

### (a) Preparation of the reaction mixture

0.421 g (0.682mmol) of Jeffamine M600 is dissolved under stirring at room temperature in 15 ml of 0.09M TMAOH solution during 10 min in a 20 ml autoclave.

0.5g of HY15 are then added to the solution under stirring during 20 min. The amount of Jeffamine M600 has been determined by keeping a NH2/Si ratio of 0.082.

### (c) Preparation of Solid I

The autoclave is then hermetically closed and the reactional medium submitted to static hydrothermal conditions at 150°C under autogeneous pressure during 20 hours. After quick cooling down of the autoclave in a water bath, the solid is recovered by filtration and washed using demineralized water until a neutral pH is reached. The solid is then dried overnight in an oven at 80°C. The solid porosity is recovered by washing or calcination of the contained organic matter in a tubular oven at 550°C (1°C/min) during 8 hours under air (200 ml/h).

### (d) Characterization of Solid I

The characteristics of the Solid I are reported in Table 7.

**Table 7 : Characteristics of the parent zeolite HY15, the recrystallized Y using M600 Jeffamine (solid I) and the recrystallized Y using quaternized M600 Jeffamine (solid B)**

| Sample | LOI (%) | Si/Al^{b} | N2 adsorption | | | | | |
|---|---|---|---|---|---|---|---|---|
| | | | V_{micro} | Vₘₑₛₒ | V_{gdmeso} | Vₜₒₜ | S_{BET} | Dₚₒᵣₑₛ^{c} |
| HY15 (parent) | 3 | 16.1 | 0.218 | 0.164 | 0.086 | 0.468 | 814 | 25 |
| HY15-JeffM600 (solid I) | 13 | 16.1 | 0.084 | 0.114 | 0.118 | 0.316 | 331 | 7.4 |
| HY15-JeffM600-Cl (ex 3 - solid B) | 16 | 16.1 | 0.114 | 0.274 | 0.084 | 0.472 | 486 | 5.9 |

| | | | | | | | | |
|---|---|---|---|---|---|---|---|---|
| ^{a} : determined by ATG between 150 and 900°C ^{b} : determined by EDX ^{c} : diameter of main pores | | | | | | | | |

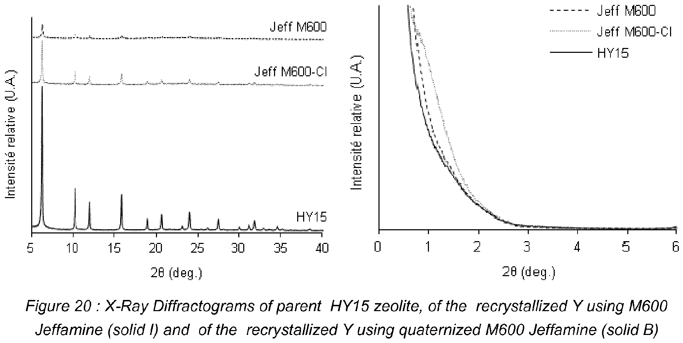

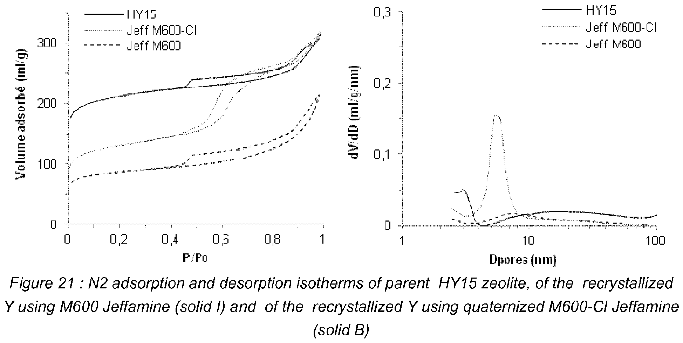

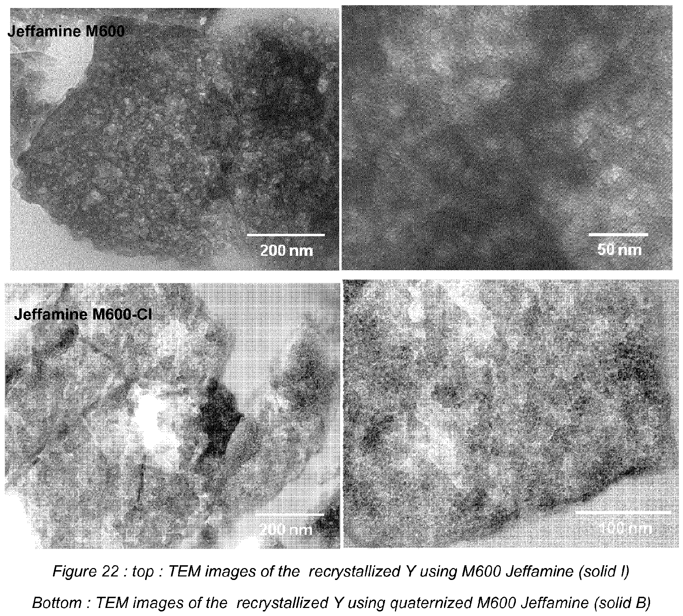

In solid I, large-angles XRD clearly exhibits a sharp decrease of the cristallinity compared to the parent HY15 zeolite and compared to solid B, whereas a large peak between 15 to 30° 2θ assigned to an amorphous aluminosilica phase is present (figure 20 - left).
Using small-angles XRD (figure 20 - right). the XRD spectrum of solid I is similar to the one of the parent HY15 zeolite, indicating that no organized mesostructure has been formed, which is also confirmed in TEM images (figure 22).
Those results are consistent with the textural properties of solid I as measured by N2 adsorption and desorption isotherms (figure 21 and table 7) : more than half of the microporous volume has been lost (-62%) with the presence of large mesopores (>10nm); the pore size distribution in solid I is large from 3 to 40 nm and centered at around 7.4 nm.
All these results indicate that a controlled mesoporization is not possible with not quaternized Jeffamine M600 in the considered synthesis conditions (high alkaline medium). A large part of the zeolite structure is destroyed, together with the formation of large mespores and macropores in the material.

### Example 12 : Preparation of Solid J by recrystallization of HY15 zeolite in presence of CTAB recovered after filtration and not calcined - comparative.

1.67g of the HY15 zeolite are mixed together at room temperature with 50 ml of a 0.09M TMAOH solution under vigourous stirring in a 120 ml autoclave.

0.83g of CTAB are then added to the suspension maintained under stirring during 20 min. The mixture has a CTAB/Si molar ratio of 0.082.

The autoclave is then hermetically closed and the reactional medium submitted to static hydrothermal conditions at 150°C under autogeneous pressure during 20 hours. After quick cooling down of the autoclave in a water bath, the solid is recovered by filtration at 25°C and washed using demineralized water until a neutral pH is reached. The solid is then dried overnight in an oven at 80°C (solid J).

By calcining solid J in a tubular oven at 550°C (1°C/min) during 8 hours under air (200 ml/h), solid A is then recovered.

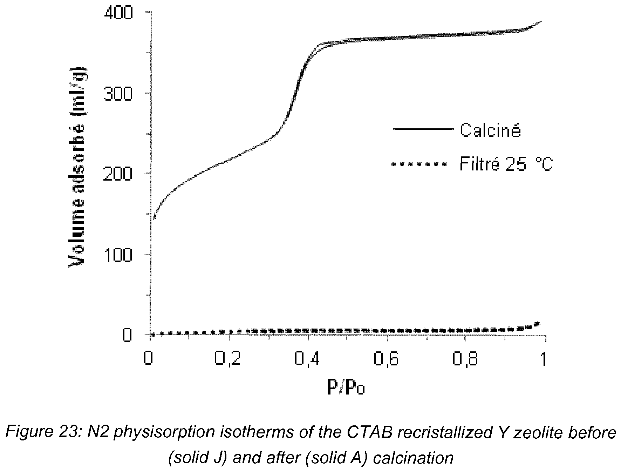

CTAB is a surfactant conserving its amphiphilic properties whatever the temperature or pH conditions are. The N2-physisorption measurements (figure 23) clearly show that CTAB remains trapped in the mesopores and cannot be removed by a temperature decrease followed by filtration. A calcination step is necessary to recover the whole porosity of the material (solid A).

## Claims

1. A method for preparing mesoporous microporous crystalline material involving at least one mesopore-templating agent according to anyone of Claims 14 or 15, said method comprising the following steps:
(a) preparing a basic aqueous solution containing a parent material, being preferably a microporous crystalline aluminosilicate, chosen among (i) a microporous crystalline material and/or seeds thereof, (ii) precursors of materials of (i), or (iii) a combination of materials from (i) and (ii); and said at least one mesopore-templating agent, said mesopore-templating agent being soluble under the form of unimers in said solution, able to generate a micellization with temperature increase so that unimers assemble to form micellar aggregates, the micellization being reversible when decreasing temperature;
(b) subjecting the synthesis medium of step (a) to mild hydrothermal conditions, the micellization of said templating agent(s) in solution occurring at a temperature lower than the temperature of the hydrothermal treatment;
(c) stopping the treatment of step (b) by cooling down the system as obtained in (b) so as to dissociate the micellar aggregates of said mesopore-templating agent(s) and optionally neutralizing the system with an acid-containing solution;
(d) recovering the mesoporous microporous crystalline material of step (c) and recovering said mesopore-templating agent(s) at least in part;
(e) optionally, placing the mesoporous microporous crystalline material of step (d) in contact, with an ion exchange solution, preferably under stirring.

2. The method according to Claim 1, wherein the parent material is
(i) an aluminosilicate selected among Y zeolite, being preferably in protonated form and having the FAU structure and a bulk Si/AI ratio above or equal to 12, and which may be obtained, for example, by applying to a parent Y zeolite at least one dealumination treatment, or ZSM-5, mordenite, ferrierite and zeolite Beta, or
(ii) the precursors of materials of (i) comprising an inorganic source of silicon selected among precipitated silica, pyrogenic silica (fumed silica), and an aqueous colloidal suspension of silica; or an organic source of silicon, preferably a tetraalkyl orthosilicate; and comprising a metal source selected from metal oxide, metal salt, and metal alkoxide, wherein the metal is selected among aluminium, boron, iron, gallium and titanium.

3. The method according to anyone of Claims 1 to 2, wherein said mesopore templating agent contains an oligomeric or polymeric chain bearing at least one ionic function and rendered amphiphilic upon the effect of the variation of a physico-chemical parameter, preferably chosen among pH, temperature and ionic strength.

4. The method according to anyone of Claims 1 to 3, wherein said mesopore templating agent:
- has a LCST above 15°C, more preferably above 20°C, most preferably above 30°C and below 200°C, more preferably below 120°C, more preferably below 100°C or;
- is a statistical copolymer of ethylene and propylene functionnalized by a quaternary ammonium salt, such as Jeffamines, the molecular size of which varying from 140 to 5000 g/mol and the ethylene oxide/propylene oxide molar ratio of which varing from 0.01 to 5, more preferably between 0.1 to 1, most preferably between 0.1 to 0.5, said Jeffamines being quaternized on their primary amine wherein the amino group of the mesopore-templating agent is preferably quaternized, most preferably with chloride or bromide or hydroxide; or
- is preferably a Jeffamine selected among Jeffamine M600 and Jeffamine M2005 wherein the amino group of the mesopore-templating agent is preferably quaternized, most preferably with chloride or bromide or hydroxide.

5. The method according to anyone of Claims 1 to 4, wherein the unimers have a hydrodynamic diameter of 0.1 to 5 nm at room temperature and the micellar aggregates have a hydrodynamic diameter of 10 nm to 2µm at a temperature ranging from 40 to 90°C respectively.

6. The method according to anyone of Claims 1 to 5, wherein the base used in step (a) for the preparation of the basic aqueous solution is a strong base and/or a weak base, the base being preferably an alkali hydroxide, alkaline earth hydroxide, tetraalkylammonium hydroxide, sodium carbonate, potassium carbonate, ammonium carbonate, sodium citrate, potassium citrate, ammonium citrate, NH4OH, and their combinations.

7. The method according to anyone of Claims 1 to 6, wherein the base used in step (a) is a tetramethylammonium hydroxide solution.

8. The method according to anyone of Claims 1 to 7, wherein the mesopore templating agent/Si ratio in step (a) ranges from 0.01 to 0.5, preferably from 0.041 to 0.3, more preferably from 0.08 to 0.165.

9. The method according to anyone of Claims 1 to 8, wherein in step (b), the basic aqueous solution as prepared in step (a) is submitted to mild hydrothermal conditions i.e.:
- at a temperature of 90 to 200°C, preferably 100 to 180°C, more preferably 100 to 160°C, and most preferably from 140 to 160° for about 5 to 30 hours, preferably from 10 to 25 hours, more preferably from 18 to 22 hours
- under autogeneous pressure from 1 to 20 bara, preferably between 1 and 15bara.

10. The method according to anyone of Claims 1 to 9, wherein in step (d) the mesoporous microporous crystalline material is recovered according to the following procedure: (d1) filtration, (d2) optionally washing, in sequential or continuous mode, of the mesoporous microporous crystalline material so as to extract the mesopore-templating agent at least in part, with a washing solution, (d3) drying, and (d4) optionally calcination.

11. The method of claim 10, wherein the washing solution is (i) demineralized water or (ii) a water solution containing nitric acid, ammonia or ammonium nitrate, or (iii) pure methanol.

12. The method according to anyone of Claims 1 to 11, wherein in step (d) the mesoporous microporous crystalline material is recovered by filtration and the filtrate is recovered and recycled as a basic aqueous solution at step (a) in a further mesoporization processing, after being adjusted to a basic pH, said mesoporization processing being repeated at least one more time.

13. The method according to anyone of Claims 1 to 12, leading to mesoporous microporous crystalline silicates or aluminosilicates having the following characteristics:
- presence of a homogenous vermicular mesoporous phase in the solid crystalline silicate or aluminosilicate;
- mesopores having a narrow size distribution centered around between 3 and 50 nm ;
- microporosity and mesoporosity intimately connected.

14. A mesopore-templating agent comprising an organic cationic product having (i) a molecular weight comprised between 250 and 3000 g/mol, (ii) an optionally branched hydrocarbon chain containing from 12 to 150 carbon atoms and from 5 to 45 oxygen atoms which are inserted within the hydrocarbon chain and wherein each oxygen is bound with two distinct carbon atoms to obtain ether bonds,(iii) a terminal quaternary ammonium moiety - ({[N(R4)(R5)](R6)ₙ}-H)⁺ wherein R4 and R5 are each selected among C₁-C₁₀ alkyl, R6 is -(CH₂)ₘ- with ₘ=1 to 10 and ₙ is 1, 2 or 3, preferably 1.

15. A mesopore templating agent according to claim 14, having the general structure [R1-O-(R2-O-)ₐ-(R3)_{b}-N(R4)(R5)(R6)]⁺, X⁻; wherein :
∘ (ₐ) and (_{b}) are each independently comprised between 0 and 75, and the sum of (ₐ) and (_{b}) is not above 75; and
∘ R1, R2, R3, R4, R5, R6 are each independently chosen among C₁-C₆ alkyl, where R1 is methyl, R2, R3, are each ethyl, propyl or isopropyl, R4, R5, R6 are each independently chosen among C₁-C₃ alkyl, preferably C1 alkyl and
∘ X⁻ is an anion, preferably chosen among Cl, Br and OH.

## Patentansprüche

1. Verfahren zur Herstellung von mesoporösem mikroporösen kristallinen Material, das mindestens ein Mesoporen-Templatmittel nach einem der Ansprüche 14 oder 15 beinhaltet, wobei das Verfahren die folgenden Schritte umfasst:
(a) Herstellen einer basischen wässrigen Lösung, enthaltend ein Ausgangsmaterial, vorzugsweise ein mikroporöses kristallines Aluminosilikat, ausgewählt aus (i) einem mikroporösen kristallinen Material und/oder Kristallkernen davon, (ii) Vorläufern von Materialien von (i) oder (iii) einer Kombination von Materialien von (i) und (ii); und das mindestens eine Mesoporen-Templatmittel, wobei das Mesoporen-Templatmittel in Form von Unimeren in der Lösung löslich und in der Lage ist, eine Mizellisierung mit Temperaturanstieg zu erzeugen, sodass sich Unimere zu mizellaren Aggregaten zusammenlagern, wobei die Mizellenbildung bei abnehmender Temperatur reversibel ist;
(b) Unterziehen des Synthesemediums von Schritt (a) milden hydrothermalen Bedingungen, wobei die Mizellenbildung der Templatmittel in Lösung bei einer Temperatur stattfindet, die niedriger als die Temperatur der hydrothermalen Behandlung ist;
(c) Stoppen der Behandlung von Schritt (b) durch Abkühlen des in (b) erhaltenen Systems, um die mizellaren Aggregate der Mesoporen-Templatmittel zu dissoziieren und gegebenenfalls das System mit einer säurehaltigen Lösung zu neutralisieren;
(d) Rückgewinnen des mesoporösen mikroporösen kristallinen Materials von Schritt (c) und zumindest anteiliges Rückgewinnen der Mesoporen-Templatmittel;
(e) gegebenenfalls Inkontaktbringen des mesoporösen mikroporösen kristallinen Materials von Schritt (d) mit einer Ionenaustauschlösung, vorzugsweise unter Rühren.

2. Verfahren nach Anspruch 1, wobei das Ausgangsmaterial
(i) ein Aluminosilikat ist, ausgewählt aus Y-Zeolith, vorzugsweise in protonierter Form und aufweisend die FAU-Struktur und ein Si/Al-Volumenverhältnis von über oder gleich 12, und das zum Beispiel erhalten werden kann, indem mindestens eine Dealuminierung auf ein Ausgangs-Y-Zeolith oder-ZSM-5, -Mordenit, -Ferrierit und Zeolith-Beta angewendet wird, oder
(ii) die Vorstufen der Materialien von (i) eine anorganische Siliziumquelle umfassen, ausgewählt aus ausgefällter Kieselsäure, pyrogener Kieselsäure (Quarzstaub) und einer wässrigen kolloidalen Suspension von Kieselsäure; oder eine organische Siliziumquelle, vorzugsweise ein Tetraalkylorthosilikat; und umfassend eine Metallquelle, ausgewählt aus Metalloxid, Metallsalz und Metallalkoxid, wobei das Metall ausgewählt ist aus Aluminium, Bor, Eisen, Gallium und Titan.

3. Verfahren nach einem der Ansprüche 1 bis 2, wobei das Mesoporen-Templatmittel eine oligomere oder polymere Kette enthält, die mindestens eine ionische Funktion trägt und aufgrund der Wirkung der Variation eines physikalisch-chemischen Parameters amphiphil ist, der vorzugsweise aus pH-Wert, Temperatur und lonenstärke ausgewählt ist.

4. Verfahren nach einem der Ansprüche 1 bis 3, wobei das Mesoporen-Templatmittel:
- eine LCST über 15 °C, bevorzugter über 20 °C, am bevorzugten über 30 °C und unter 200 °C, bevorzugter unter 120 °C, bevorzugter unter 100 °C aufweist oder;
- ein statistisches Copolymer von Ethylen und Propylen ist, das durch ein quaternäres Ammoniumsalz wie z. B. Jeffamine funktionalisiert ist, wobei die Molekülgröße von 140 bis 5000 g/mol variiert und das Ethylenoxid/Propylenoxid-Molverhältnis von 0,01 bis 5 variiert, vorzugsweise von 0,1 bis 1, am bevorzugtesten von 0,1 bis 0,5, wobei die Jeffamine an ihrem primären Amin quaternisiert sind, wobei die Aminogruppe des Mesoporen-Templatmittels vorzugsweise quaternisiert ist, am bevorzugtesten mit Chlorid oder Bromid oder Hydroxid; oder
- vorzugsweise ein Jeffamin ist, ausgewählt aus Jeffamin M600 und Jeffamin M2005, wobei die Aminogruppe des Mesoporen-Templatmittels vorzugsweise quaternisiert ist, am bevorzugtesten mit Chlorid oder Bromid oder Hydroxid.

5. Verfahren nach einem der Ansprüche 1 bis 4, wobei die Unimere bei Raumtemperatur einen hydrodynamischen Durchmesser von 0,1 bis 5 nm aufweisen und die mizellaren Aggregate einen hydrodynamischen Durchmesser von 10 nm bis 2 µm bei einer Temperatur im Bereich von jeweils 40 bis 90 °C aufweisen.

6. Verfahren nach einem der Ansprüche 1 bis 5, wobei die in Schritt (a) zur Herstellung der basischen wässerigen Lösung verwendete Lauge eine starke Lauge und/oder eine schwache Lauge ist, wobei die Lauge vorzugsweise ein Alkalihydroxid, Erdalkalihydroxid, Tetraalkylammoniumhydroxid, Natriumcarbonat, Kaliumcarbonat, Ammoniumcarbonat, Natriumcitrat, Kaliumcitrat, Ammoniumcitrat, NH40H und deren Kombinationen ist.

7. Verfahren nach einem der Ansprüche 1 bis 6, wobei die in Schritt (a) verwendete Lauge eine Tetramethylammoniumhydroxidlösung ist.

8. Verfahren nach einem der Ansprüche 1 bis 7, wobei das Verhältnis zwischen Mesoporen-Templatmittel und Si in Schritt (a) im Bereich von 0,01 bis 0,5 liegt, vorzugsweise von 0,041 bis 0,3, bevorzugter von 0,08 bis 0,165.

9. Verfahren nach einem der Ansprüche 1 bis 8, wobei in Schritt (b) die in Schritt (a) hergestellte basische wässrige Lösung milden hydrothermalen Bedingungen unterworfen wird, d. h.:
- bei einer Temperatur von 90 bis 200 °C, bevorzugt 100 bis 180 °C, bevorzugter 100 bis 160 °C und am bevorzugten 140 bis 160 °C für etwa 5 bis 30 Stunden, bevorzugt von 10 bis 25 Stunden, bevorzugter von 18 bis 22 Stunden
- unter autogenem Druck von 1 bis 20 bar abs., vorzugsweise zwischen 1 und 15 bar abs.

10. Verfahren nach einem der Ansprüche 1 bis 9, wobei in Schritt (d) das mesoporöse mikroporöse kristalline Material nach dem folgenden Verfahren gewonnen wird: (d1) Filtration, (d2) gegebenenfalls Waschen des mesoporösen mikroporösen kristallinen Materials in sequenzieller oder kontinuierlicher Weise, um das Mesoporen-Templatmittel zumindest teilweise mit einer Waschlösung zu extrahieren, (d3) Trocknen und (d4) Trocknen, gegebenenfalls Calcinierung.

11. Verfahren nach Anspruch 10, wobei die Waschlösung (i) demineralisiertes Wasser oder (ii) eine Wasserlösung ist, die Salpetersäure, Ammoniak oder Ammoniumnitrat enthält, oder (iii) reines Methanol ist.

12. Verfahren nach einem der Ansprüche 1 bis 11, wobei in Schritt (d) das mesoporöse mikroporöse kristalline Material durch Filtration rückgewonnen wird und das Filtrat in Schritt (a) in einer weiteren Mesoporisationsverarbeitung rückgewonnen und wiederaufgearbeitet wird, nachdem es auf einen basischen pH-Wert eingestellt wurde, wobei die Mesoporisationsverarbeitung mindestens noch einmal wiederholt wird.

13. Verfahren nach einem der Ansprüche 1 bis 12, das zu mesoporösen mikroporösen kristallinen Silikaten oder Aluminosilikaten mit den folgenden Eigenschaften führt:
- Vorhandensein einer homogenen mesoporösen Vermikularphase im festen kristallinen Silikat oder Aluminosilikat;
- Mesoporen mit einer engen Größenverteilung, die um 3 und 50 nm herum zentriert ist;
- eng miteinander verbundene Mikroporosität und Mesoporosität.

14. Mesoporen-Templatmittel, umfassend ein organisches kationisches Produkt mit (i) einem Molekulargewicht zwischen 250 und 3000 g/mol, (ii) einer gegebenenfalls verzweigten Kohlenwasserstoffkette mit 12 bis 150 Kohlenstoffatomen und 5 bis 45 Sauerstoffatomen, die in die Kohlenwasserstoffkette eingefügt sind, und wobei jeder Sauerstoff an zwei unterschiedliche Kohlenstoffatome gebunden ist, um Etherbindungen zu erhalten, (iii) eine endständige quaternäre Ammoniumgruppe - ({[N(R4)(R5)](R6)ₙ}-H)⁺, wobei R4 und R5 jeweils ausgewählt sind aus C₁-C₁₀-Alkyl, R6 -(CH₂)ₘ-, wobei ₘ = 1 bis 10 und ₙ 1, 2 oder 3 beträgt, vorzugsweise 1.

15. Mesoporen-Templatmittel nach Anspruch 14 mit der allgemeinen Struktur [R1-O-(R2-O-)ₐ-(R3)_{b}-N(R4)(R5)(R6)]⁺, X⁻; wobei:
∘ (ₐ) und (_{b}) jeweils unabhängig voneinander zwischen 0 und 75 liegen und die Summe aus (ₐ) und (_{b}) nicht über 75 liegt; und
∘ R1, R2, R3, R4, R5, R6 jeweils unabhängig ausgewählt aus C₁-C₆-Alkyl, wobei R1 Methyl ist, R2, R3 jeweils Ethyl, Propyl oder Isopropyl sind, R4, R5, R6 jeweils unabhängig ausgewählt sind aus C₁-C₃Alkyl, vorzugsweise C1-Alkyl und
∘ X⁻ ein Anion ist, das vorzugsweise ausgewählt ist aus Cl, Br und OH.

## Revendications

1. Procédé de préparation d'un matériau cristallin microporeux mésoporeux impliquant au moins un agent servant de modèle mésoporeux selon l'une quelconque des revendications 14 ou 15, ledit procédé comprenant les étapes suivantes :
(a) préparer une solution aqueuse basique contenant un matériau parent, qui est de préférence un aluminosilicate cristallin microporeux, choisi parmi (i) un matériau cristallin microporeux et/ou des germes de celui-ci, (ii) des précurseurs des matériaux de (i) ou (iii) une combinaison des matériaux de (i) et (ii) ; et ledit au moins un agent de modèle mésoporeux, ledit agent servant de modèle mésoporeux étant soluble sous la forme d'unimères dans ladite solution, capable de générer une micellisation avec une augmentation de température afin que les monomères s'assemblent pour former des agrégats micellaires, la micellisation étant réversible lorsque la température diminue ;
(b) soumettre le milieu de synthèse de l'étape (a) à des conditions hydrothermiques douces, la micellisation dudit ou desdits agents servant de modèle dans une solution se produisant à une température inférieure à la température du traitement hydrothermique ;
(c) arrêter le traitement de l'étape (b) en refroidissant le système tel qu'obtenu en (b) de manière à dissocier les agrégats micellaires dudit ou desdits agents servant de modèle mésoporeux et éventuellement neutraliser le système avec une solution contenant un acide ;
(d) récupérer le matériau cristallin microporeux mésoporeux de l'étape (c) et récupérer au moins en partie ledit ou lesdits agents servant de modèle mésoporeux ;
(e) éventuellement, mettre en contact le matériau cristallin microporeux mésoporeux de l'étape (d) avec une solution échangeuse d'ions, de préférence sous agitation.

2. Procédé selon la revendication 1, dans lequel le matériau parent est
(i) un aluminosilicate choisi parmi la zéolite Y, qui est de préférence sous forme protonée et ayant la structure FAU et un rapport Si/Al global supérieur ou égal à 12, et qui peut être obtenu, par exemple, en appliquant à une zéolite Y parent au moins un traitement de désalumination, ou ZSM-5, la mordénite, la ferriérite et la zéolite Bêta, ou
(ii) les précurseurs des matériaux de (i) comprenant une source inorganique de silicium choisie parmi la silice précipitée, la silice pyrogénée (silice fumée) et une suspension aqueuse colloïdale de silice ; ou une source organique de silicium, de préférence un orthosilicate de tétraalkyle ; et comprenant une source de métal choisie parmi un oxyde de métal, un sel de métal et un alcoxyde de métal, dans lequel le métal est choisi parmi l'aluminium, le bore, le fer, le gallium et le titane.

3. Procédé selon l'une quelconque des revendications 1 à 2, dans lequel ledit agent servant de modèle mésoporeux contient une chaîne oligomère ou polymère portant au moins une fonction ionique et rendue amphiphile sous l'effet de la variation d'un paramètre physico-chimique, de préférence choisi parmi le pH, la température et la force ionique.

4. Procédé selon l'une quelconque des revendications 1 à 3, dans lequel ledit agent servant modèle mésoporeux :
- a une LCST supérieure à 15 °C, plus préférablement supérieure à 20 °C, de manière préférée entre toutes supérieure à 30 °C et inférieure à 200 °C, plus préférablement inférieure à 120 °C, plus préférablement inférieure à 100 °C ou ;
- est un copolymère statistique d'éthylène et de propylène fonctionnalisé par un sel d'ammonium quaternaire, tel que les Jeffamines, dont la taille moléculaire varie de 140 à 5 000 g/mol et dont le rapport molaire oxyde d'éthylène oxyde de propylène varie de 0,01 à 5, plus préférablement de 0,1 à 1, de manière préférée entre toutes de 0,1 à 0,5, lesdites Jeffamines étant quaternisées sur leur amine primaire dans lesquelles le groupe amino de l'agent servant de modèle mésoporeux est de préférence quaternisé, de manière préférée entre toutes avec un chlorure ou un bromure ou un hydroxyde ; ou
- est de préférence une Jeffamine choisie parmi la Jeffamine M600 et la Jeffamine M2005, dans laquelle le groupe amino de l'agent servant de modèle mésoporeux est de préférence quaternisé, de manière préférée entre toutes avec un chlorure ou un bromure ou un hydroxyde.

5. Procédé selon l'une quelconque des revendications 1 à 4, dans lequel les unimères ont un diamètre hydrodynamique de 0,1 à 5 nm à température ambiante et les agrégats micellaires ont un diamètre hydrodynamique de 10 nm à 2 µm à une température allant de 40 à 90 °C respectivement.

6. Procédé selon l'une quelconque des revendications 1 à 5, dans lequel la base utilisée dans l'étape (a) pour la préparation de la solution aqueuse basique est une base forte et/ou une base faible, la base étant de préférence un hydroxyde alcalin, un hydroxyde alcalino-terreux, un hydroxyde de tétraalkylammonium, le carbonate de sodium, le carbonate de potassium, le carbonate d'ammonium, le citrate de sodium, le citrate de potassium, le citrate d'ammonium, NH4OH, et leurs combinaisons.

7. Procédé selon l'une quelconque des revendications 1 à 6, dans lequel la base utilisée à l'étape (a) est une solution d'hydroxyde de tétraméthylammonium.

8. Procédé selon l'une quelconque des revendications 1 à 7, dans lequel le rapport agent servant de modèle mésoporeux/Si de l'étape (a) est compris dans la plage de 0,01 à 0,5, de préférence de 0,041 à 0,3, plus préférablement de 0,08 à 0,165.

9. Procédé selon l'une quelconque des revendications 1 à 8, dans lequel, dans l'étape (b), la solution aqueuse basique préparée à l'étape (a) est soumise à des conditions hydrothermiques douces, à savoir :
- à une température de 90 à 200 °C, de préférence de 100 à 180 °C, plus préférablement de 100 à 160 °C, et de manière préférée entre toutes de 140 à 160 °C pendant environ 5 à 30 heures, de préférence de 10 à 25 heures, plus préférablement de 18 à 22 heures
- sous une pression autogène de 1 à 20 bars, de préférence entre 1 et 15 bars.

10. Procédé selon l'une quelconque des revendications 1 à 9, dans lequel, à l'étape (d), le matériau cristallin microporeux mésoporeux est récupéré selon la procédure suivante : (d1) filtration, (d2) lavage éventuel, en mode séquentiel ou continu, du matériau cristallin microporeux mésoporeux de façon à extraire au moins en partie l'agent servant de modèle mésoporeux, avec une solution de lavage, (d3) séchage, et (d4) calcination éventuelle.

11. Procédé selon la revendication 10, dans lequel la solution de lavage est (i) de l'eau déminéralisée ou (ii) une solution aqueuse contenant de l'acide nitrique, de l'ammoniac ou du nitrate d'ammonium, ou (iii) du méthanol pur.

12. Procédé selon l'une quelconque des revendications 1 à 11, dans lequel à l'étape (d) le matériau cristallin microporeux mésoporeux est récupéré par filtration et le filtrat est récupéré et recyclé en tant que solution aqueuse basique vers l'étape (a) dans un autre traitement de mésoporisation, après avoir été ajusté à un pH basique, ledit traitement de mésoporisation étant répété au moins une fois de plus.

13. Procédé selon l'une quelconque des revendications 1 à 12, conduisant à des silicates ou aluminosilicates cristallins microporeux mésoporeux ayant les caractéristiques suivantes :
- la présence d'une phase mésoporeuse vermiculaire homogène dans le silicate ou l'aluminosilicate cristallin solide ;
- des mésopores ayant une distribution de taille étroite centrée entre environ 3 et 50 nm ;
- de smicroporosité et mésoporosité intimement liées.

14. Agent servant de modèle mésoporeux comprenant un produit cationique organique ayant (i) un poids moléculaire compris entre 250 et 3 000 g/mol, (ii) une chaîne hydrocarbonée éventuellement ramifiée contenant de 12 à 150 atomes de carbone et de 5 à 45 atomes d'oxygène qui sont insérés dans la chaîne hydrocarbonée et dans lequel chaque oxygène est lié avec deux atomes de carbone distincts pour obtenir des liaisons éther, (iii) un fragment ammonium quaternaire terminal - ({[N(R4)(R5)](R6)ₙ}-H)⁺, où R4 et R5 sont chacun choisis parmi un groupe alkyle en C₁ à C₁₀, R6 représente -(CH₂₎ₘ- avec ₘ = 1 à 10 et ₙ est égal à 1, 2 ou 3, de préférence 1.

15. Agent servant de modèle mésoporeux selon la revendication 14, ayant la structure générale [R1-O-(R2-O-)ₐ-(R3)_{b}-N(R4)(R5)(R6)]⁺, X⁻ ; où :
∘ (ₐ) et (_{b}) sont chacun indépendamment compris entre 0 et 75, et la somme de (ₐ) et (_{b}) n'est pas supérieure à 75 ; et
∘ R1, R2, R3, R4, R5, R6 sont chacun indépendamment choisis parmi un groupe alkyle en C₁ à C₆, où R1 est un groupe méthyle, R2, R3, sont chacun un groupe éthyle, propyle ou isopropyle, R4, R5, R6 sont chacun indépendamment choisis parmi un groupe alkyle en C₁ à C₃, de préférence un groupe alkyle en C1 et
∘ X⁻ est un anion, de préférence choisi parmi Cl, Br et OH.
